(19) Europäisches Patentamt / European Patent Office / Office européen des brevets

(11) **EP 4 070 612 B1**

(12) **EUROPEAN PATENT SPECIFICATION**

(45) Date of publication and mention
of the grant of the patent:
**22.07.2026 Bulletin 2026/30**

(21) Application number: **20811777.0**

(22) Date of filing: **18.11.2020**

(51) International Patent Classification (IPC):
*H04W 74/00* (2009.01)     *H04W 88/06* (2009.01)

(52) Cooperative Patent Classification (CPC):
**H04W 74/006**

(86) International application number:
**PCT/SE2020/051101**

(87) International publication number:
**WO 2021/112740 (10.06.2021 Gazette 2021/23)**

(54) **CONTROL RESOURCES FOR BANDWIDTH-RESTRICTED WIRELESS DEVICES**

STEUERUNGSRESSOURCEN FÜR BANDBREITENBEGRENZTE DRAHTLOSE GERÄTE

RESSOURCES DE COMMANDE POUR DISPOSITIFS SANS FIL PRÉSENTANT DES RESTRICTIONS DE BANDE PASSANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2019 US 201962944454 P**

(43) Date of publication of application:
**12.10.2022 Bulletin 2022/41**

(73) Proprietor: **Telefonaktiebolaget LM Ericsson (publ)**
**164 83 Stockholm (SE)**

(72) Inventors:
• **WANG, Yi-Pin Eric**
  **Fremont, California 94539 (US)**
• **LIBERG, Olof**
  **122 37 Enskede (SE)**
• **HÖGLUND, Andreas**
  **170 62 Solna (SE)**
• **MOZAFFARI, Mohammad**
  **San José, California 95134 (US)**
• **LIN, Xingqin**
  **Santa Clara, California 95054 (US)**
• **SUI, Yutao**
  **171 67 Solna (SE)**
• **FELTRIN, Luca**
  **171 47 Solna (SE)**

(74) Representative: **Ericsson**
**Patent Development**
**Torshamnsgatan 21-23**
**164 80 Stockholm (SE)**

(56) References cited:
WO-A1-2018/030305     US-A1- 2013 083 753
US-A1- 2016 219 587     US-A1- 2019 053 140

## Description

## TECHNICAL FIELD

The present disclosure generally relates to wireless communication technology, and more specifically to control resources for bandwidth-restricted wireless devices.

## BACKGROUND

In 3GPP Release 15, the first release of the 5G system (5GS) was specified. This is a new generation radio access technology intended to serve use cases such as enhanced mobile broadband (eMBB), ultra-reliable and low latency communication (URLLC) and massive machine-type communication (mMTC). 5G includes the New Radio (NR) access stratum interface and the 5G Core Network (5GC).

NR Release 15 supports radio technologies optimized for the support of eMBB and URLLC. Release 17 is expected to add initial support for NR mMTC. Some example implementations of the approach proposed in the present disclosure relate to the most basic network signaling for indicating and configuring the support for NR mMTC services. Relevant features and aspects that relate to such example implementations will be introduced in respective sections.

NR-Light (also referred to as NR-Redcap)

Low-cost or low-complexity UE implementations are needed for the 5G system, for example for massive industrial sensor deployments or wearables. NR-Light has been used as the working name for the discussion of such low-complexity UEs in 3GPP. NR-Light relates to reduced capability UEs and is sometimes referred to as NR-Redcap. NR-Light is a new feature that is currently under discussion and could be introduced as early as in 3GPP Release 17. NR-Light is intended for use cases that do not require a device to support full-fledged NR capability and International Mobile Telecommunications 2020 (IMT-2020) performance requirements. For example, the data rate does not need to reach above 1 Gbps, and the latency does not need to be as low as 1 ms. By relaxing the data rate and latency targets, NR-Light allows low-cost or low-complexity UE implementations.

In 3GPP Release 15, an NR UE is required to support 100 MHz carrier bandwidth in frequency range 1 (from 410 MHz to 7125 MHz) and 200 MHz carrier bandwidth in frequency range 2 (from 24.25 GHz to 52.6 GHz). For NR-Light UEs, supporting 100 MHz or 200 MHz bandwidth is superfluous. For example, a UE bandwidth of 8.64 MHz might be sufficient if the use cases do not require a data rate higher than 20 Mbps. Reduced UE bandwidth results in complexity reduction and maybe also energy consumption reduction.

While there may be several advantages associated with large bandwidths, not all UEs may be able to handle such bandwidths. It would be desirable to provide a new way to allow wireless devices, such as bandwidth-restricted UEs (in other word, UEs with reduced bandwidth), to use a network supporting large bandwidths.

The patent application publication US 2013/0083753 A1 discloses device communication using a reduced channel bandwidth. The patent application publication US 2019/0053140 A1 discloses repetitive transmission for NB-IoT. The patent application publication WO 2018/030305 A1 discloses a wireless terminal comprising a transmitter/receiver configured so as to send and receive wireless signals within a limited bandwidth narrower than a system transmission/-reception bandwidth. Patent application publication US 2016/0219587 A1 discloses control channel and data channel design for user equipment.

## SUMMARY

The invention is defined by the appended claims.

## BRIEF DESCRIPTION OF THE DRAWINGS

In what follows, example embodiments will be described in greater detail with reference to the accompanying drawings, on which:

Figure 1 is a flow chart of a method performed by a network node, according to an embodiment;
Figure 2 is a schematic overview of an initial access solution for NR-Light UEs, according to an embodiment;
Figure 3 shows a representation of CORESET#0 when the resources for the first $N_{PDCCH}$ PDCCHs are reserved;
Figure 4 is a flow chart of a method performed by a wireless device, according to an embodiment;
Figure 5 shows a wireless network in accordance with some embodiments;
Figure 6 shows a User Equipment in accordance with some embodiments;

Figure 7 shows a virtualization environment in accordance with some embodiments

Figure 8 shows a telecommunication network connected via an intermediate network to a host computer in accordance with some embodiments;

Figure 9 shows a host computer communicating via a base station with a user equipment over a partially wireless connection in accordance with some embodiments; and

Figures 10-13 show methods implemented in a communication system including a host computer, a base station and a user equipment in accordance with some embodiments.

All the figures are schematic, not necessarily to scale, and generally only show parts which are necessary in order to elucidate the respective embodiments, whereas other parts may be omitted or merely suggested. Any reference number appearing in multiple drawings refers to the same object or feature throughout the drawings, unless otherwise indicated.

## DETAILED DESCRIPTION

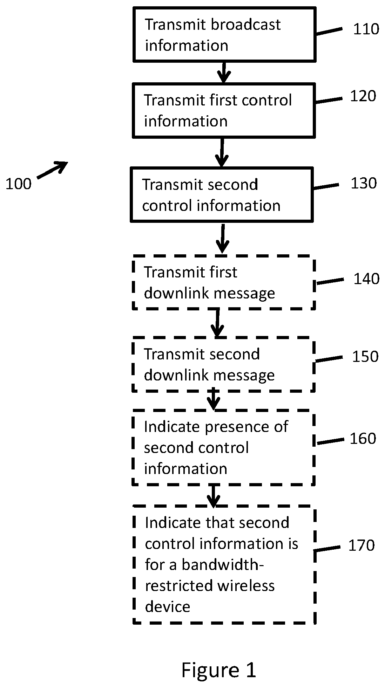

The invention made is disclosed in the embodiments referring to figures 1, 2, and 5.

Some of the embodiments contemplated herein will now be described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. It will be appreciated that the word "comprising" does not exclude other elements or steps. The word "or" is not to be interpreted as an exclusive or (sometimes referred to as "XOR"). On the contrary, expressions such as "A or B" covers all the cases "A and not B", "B and not A" and "A and B". The mere fact that certain measures are recited in mutually different dependent claims or embodiments does not indicate that a combination of these measures cannot be used to advantage. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Throughout the present disclosure, the term "information" is employed in a broad sense and may refer to any type of information or signalling or data, for example comprising one or more bits or one or more messages.

Throughout the present disclosure, the term "message" is employed in a broad sense and may refer to any type of message or information or signalling or data, for example comprising one or more bits.

## System information in New Radio (NR)

System information (SI) in NR is delivered through master information block (MIB) and system information blocks (SIBs). MIB is transmitted on the Physical Broadcast Channel (PBCH). It contains a small amount of information, necessary for the user equipment (UE) to receive the remaining system information in the SIBs. Among other pieces of information, the MIB contains configuration of CORESET#0 (that is, Control Resource Set #0) and Search Space #0. A CORESET provides a time-frequency region where the **UE** monitors for Physical Downlink Control Channel (PDCCH). A Search Space defines monitoring locations of the CORESET in time.

The structure of the MIB is specified in the standard and the format cannot change between releases as this would prevent backwards compatibility. The smallest possible CORESET#0 size in the frequency domain is 24 RBs (resource blocks) in the current NR spec, i.e. Release 15. The MIB occupies 20 RBs. Currently, except one reserved bit, all the bits in the MIB have a specific meaning defined in the NR standard.

SIBs are scheduled in a similar way as normal data transmissions, but are repeated periodically by being scheduled in a SI window. A PDCCH indicates to the UE that the PDSCH (Physical Downlink Shared Channel) is to be received, and the PDSCH contains the SIB (or SIBs).

One of the initial access steps is for the UE to acquire system information block type 1, SIB1 (SIB1 is acquired after the UE acquires MIB), which is scheduled through PDCCH using Search Space #0 associated with CORESET#0. In NR, CORESET#0 has bandwidths 4.32 MHz, 8.64 MHz, or 17.28 MHz in frequency range 1 (FR1), and 34.56 MHz or 69.12 MHz in frequency range 2 (FR2). The bandwidth of CORESET#0 depends on the subcarrier spacing indicated in MIB (by the parameter subCarrierSpacingCommon) and is configured by the network. For example, if CORESET#0 uses 30 kHz subcarrier spacing for PDCCH, the bandwidth of CORESET#0 can be either 8.64 MHz or 17.28 MHz. The network may choose either bandwidth option. Between the two options, some implementation consideration may favor the configuration of 17.28 MHz bandwidth for CORESET#0. For example, with 30 kHz subcarrier spacing and 17.28 MHz CORESET#0 bandwidth, PDCCH can operate with aggregation level (AL) 16, which offers the highest PDCCH coverage. In comparison, configuring CORESET#0 with bandwidth 8.64 MHz can only support AL 8 when PDCCH is configured with 30 kHz subcarrier spacing, which results in approximately 3 dB coverage reduction compared to AL 16. Furthermore, using a higher CORESET#0 bandwidth gives rise to higher scheduling capacity. Using 17.28 MHz bandwidth, however, may result in CORESET#0 not being useable by low-complexity UEs, for example NR-Light UEs, that only support smaller UE bandwidths. This may especially be the case considering that currently only an interleaved mapping is supported by CORESET#0, which means that a PDCCH candidate may span the entire bandwidth of CORESET#0.

A PDCCH mapped to resources in CORESET#0 may be used to transmit downlink control information (DCI) that schedules PDSCH carrying SIB1. In that case, the DCI is masked with SI-RNTI (System Information Radio Network Temporary Identifier). What this means is that the cyclic redundancy check (CRC) of PDCCH is scrambled with SI-RNTI. Currently, DCI format 1_0 with CRC scrambled by SI-RNTI is used to schedule the SIBs in NR. The format of DCI format 1_0 with CRC scrambled by SI-RNTI for scheduling SIB1 is given in Table 1 below.

Table 1: DCI format 1_0 with CRC scrambled by SI-RNTI which is used to schedule SIB1

| Field (Item) | Bits | Reference |
|---|---|---|
| Frequency domain resource assignment | Variable | Variable with downlink (DL) bandwidth part (BWP) N_RB resource $$\left\lceil \log_2(N_{RB}^{DL,BWP}(N_{RB}^{DL,BWP}+1)/2) \right\rceil$$ indicates the size of CORESET 0 |
| Time domain resource assignment | 4 | Carries the row index of the items in Default PDSCH time domain table given in TS 38.214 V15.7.0 (Table 5.1.2.1.1-2, Table 5.1.2.1.1-3, Table 5.1.2.1.1-4, Table 5.1.2.1.1-5) |
| VRB-to-PRB mapping | 1 | According to TS 38.212 V15.7.0 Table 7.3.1.2.2-5 <br> 0 : Non-Interleaved <br> 1 : Interleaved |
| Modulation and coding scheme | 5 | TS 38.214 V15.7.0- Table 5.1.3.1-1: MCS index table 1 for PDSCH |
| Redundancy Version | 2 | 0,1, 2, or 3 |
| System Information Indicator | 1 | 0 : SIB1 <br> 1 : SI messages |
| Reserved | 15 | Reserved |

Supporting bandwidth-restricted wireless devices

Configuring a wide CORESET#0 bandwidth, although advantageous in terms of coverage and scheduling capacity, may create a problem for low-complexity UEs that only support smaller UE bandwidths than the bandwidth required for CORESET#0. The present disclosure provides at least some example embodiments for enabling a bandwidth-restricted wireless device (such as a low-complexity UE in NR-Light) to access an NR cell even when the CORESET#0 of the NR cell is configured to a wider bandwidth than the maximum bandwidth supported by the wireless device. That is, a restriction that could have been present for how to configure a wider CORESET#0 when NR-Light is to be supported in the cell may be removed. Although several of the example embodiments presented in the present disclosure are expressed in terms of NR terminology, it will be appreciated that the ideas and approaches presented herein could also be applied in other communication technologies with similar propertied and/or features as NR.

Throughout the present disclosure, the term "bandwidth-restricted wireless device" refers to a wireless device that has a lower bandwidth than other wireless devices in the wireless network, and/or which is not able to use the full bandwidth of the wireless network, and/or which is not able use certain radio resources of the network due to a limitation of the bandwidth supported by the bandwidth-restricted wireless device. A bandwidth-restricted wireless device may for example have a bandwidth (or may for example only support bandwidths) of at most 10 MHz or 11 MHz or 12 MHz or 13 MHz or 14MHz or 15 MHz or 20 MHz or 25 MHz, for frequency range 1. A bandwidth-restricted wireless device may for example have a bandwidth (or may for example only support bandwidths) of at most 40 MHz or 41 MHz or 42 MHz or 43 MHz or 44MHz or 45 MHz or 50 MHz or 60 MHz or 100 MHz, for frequency range 2. The bandwidth restriction may for example be expressed in terms of the maximum number of contiguous resource blocks that the wireless device is capable of receiving. For example, with 30 kHz subcarrier spacing one resource block has bandwidth 360 kHz. Thus, the 10 MHz bandwidth restriction can be expressed as a restriction of a maximum of 27 resource blocks in the case of 30 kHz subcarrier spacing. Currently CORESET#0 for the 30 kHz subcarrier spacing case can be configured to have up to 48 resource blocks. Thus, a bandwidth-restricted wireless device may for example have a bandwidth of lower than 48 resource blocks in the case of 30 kHz subcarrier spacing. In some example embodiments described in the present disclosure, bandwidth-restricted wireless devices may be referred to as NR-Light UEs. It will be appreciated that a "bandwidth-restricted wireless device" need not necessarily be restricted in the sense that something is preventing or restricting it from using its own full bandwidth capacity. A "bandwidth-restricted wireless device" may for example be a low-complexity UE that is simply not sufficiently advanced or powerful to support large bandwidths.

Example embodiments

Figure 1 is a flow chart of a method 100 performed by a network node, according to an embodiment. The method 100 comprises transmitting 110 broadcast information which indicates (or configures or defines) a set of control resource elements. The method 100 comprises transmitting 120 first control information in the set of control resource elements. The first control information schedules a first downlink message. The method 100 comprises transmitting 130 second control information in a subset of the set of control resource elements for use by a bandwidth-restricted wireless device. The subset of the set of control resource elements has a smaller bandwidth than the set of control resource elements. The second control information schedules a second downlink message.

The set of control resource elements could for example be referred to as a set of control resources. The first control information could for example be referred to as first downlink control information. The second control information could also be referred to as second downlink control information. The broadcast information may for example be information transmitted via a broadcast channel, and/or information broadcasted by the network node for receipt of one or more wireless devices. The second control information is intended for use by a bandwidth-restricted wireless device.

The network node performing the method 100 may be any type of equipment which is able to communicate directly or indirectly with a wireless device and/or with other network nodes or equipment in a wireless network to enable and/or provide wireless access to the wireless device and/or to perform other functions (e.g., administration) in the wireless network. Examples of network nodes include, but are not limited to, access points (APs) (e.g., radio access points) and base stations (BSs) (e.g., radio base stations, Node Bs, evolved Node Bs (eNBs) and NR NodeBs (gNBs)). The network node may for example employ one or more radio access technologies such as Bluetooth, Wi-Fi, GSM, UMTS, LTE, or NR to communicate with a wireless device.

A bandwidth-restricted wireless device may for example not be able to receive the first control information transmitted 120 in the set of control resource elements, but it may be able to receive the second control information transmitted 130 in the subset of the set of control resource elements since that subset has a smaller bandwidth than the set of control resource elements.

In frequency range 1 (from 410 MHz to 7125 MHz), the bandwidth-restricted wireless device may for example only support a maximum bandwidth of less than 10 MHz, or 11 MHz, or 12 MHz, or 13 MHz, or 14 MHz, or 15 MHz, or 20 MHz, or 25 MHz. The set of control resource elements may have a bandwidth of more than this, for example at least 10 MHz, or 15 MHz, or 20 MHz, or 25 MHz, while the subset of the set of control resource elements may have a bandwidth supported by the bandwidth-restricted wireless device. Similarly, the first downlink message may have a bandwidth too large to be supported by the bandwidth-restricted wireless device (such as at least 10 MHz, or 15 MHz, or 20 MHz, or 25 MHz) while the second downlink message may have a bandwidth supported by the bandwidth-restricted wireless device.

In frequency range 2 (from 24.25 GHz to 52.6 GHz)), the bandwidth-restricted wireless device may for example only support a maximum bandwidth of less than 40 MHz, or 41 MHz, or 42 MHz, or 43 MHz, or 44 MHz, or 45 MHz, or 50 MHz, or 60 MHz. The set of control resource elements may have a bandwidth of more than this, for example at least 40 MHz, or 45 MHz, or 50 MHz, or 55 MHz, or 60 MHz, while the subset of the set of control resource elements may have a bandwidth supported by the bandwidth-restricted wireless device. Similarly, the first downlink message may have a bandwidth too large to be supported by the bandwidth-restricted wireless device (such as at least 40 MHz, or 45 MHz, or 50 MHz, or 55 MHz, or 60 MHz) while the second downlink message may have a bandwidth supported by the bandwidth-restricted wireless device.

In the method 100, the first control information (which may for example be a DCI sent in CORESET#0 in PDCCH) may for example also have a bandwidth that is larger than the maximum bandwidth supported by the bandwidth-restricted wireless device. However, even if the first control information had a smaller bandwidth, the set of control resource elements in which it is to be received may have a too large bandwidth to be monitored by the bandwidth-restricted wireless device.

The method 100 may optionally comprise transmitting 140 the first downlink message and/or transmitting 150 the second downlink message. The second control information and/or the second downlink message may for example be power boosted relative to a reference power level. The first downlink message and/or the second downlink message may for example be adapted for use in random access, or paging, or system information acquisition. The first downlink message and/or the second downlink message may for example be adapted for use in a random access response. Furthermore, the first downlink message and/or the second downlink message may for example be adapted for a paging message. The first downlink message and/or the second downlink message may for example be adapted for use in random access configuration. For example, the first downlink message may be a system information message (for example SIB1) carrying information about how the physical random access channel is configured.

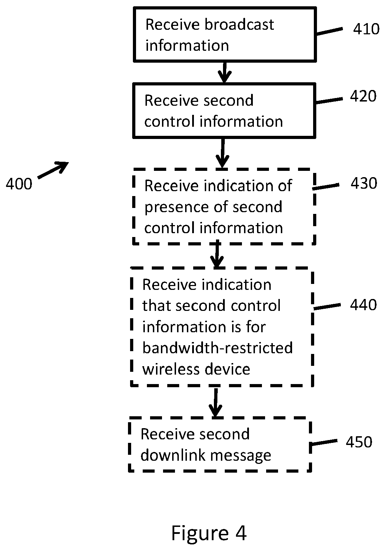

The method 100 may optionally comprise indicating 160 presence of the second control information and/or indicating 170 that the second control information is for use by a bandwidth-restricted wireless device. As described below with reference to Figure 4, such information may be employed by a wireless device to determine whether bandwidth-restricted wireless devices are supported by the network node.

The method 100 may optionally comprise indicating a position and/or size with respect to time and/or frequency of the subset of the set of control resource elements. In other words, the network node may indicate a time offset and/or a frequency offset, and/or a duration, and/or a bandwidth of the subset of the set of control resource elements. This indication may for example be employed by a wireless device so that the wireless device knowns where to receive (or where to look for, or where to attempt to receive) the second control information transmitted 130 by the network node.

In some example embodiments, the first control information (transmitted at step 120) may be carried by a first PDCCH and the second control information (transmitted at step 130) may be carried by a second PDCCH. The first PDCCH may be multiplexed in time and/or frequency with the second PDCCH.

In some example embodiments, the second control information (transmitted at step 130) may be masked with a different radio network temporary identifier (RNTI) than the first control information (transmitted at step 120). In other words, the first control information may be carried by a PDCCH for which a cyclic redundancy check (CRC) is scrambled with a first RNTI, and the second control information may be carried by a PDCCH for which a CRC is scrambled with a second RNTI which is distinct from the first RNTI. The first control information may for example be masked with a system information RNTI (SI-RNTI).

The second control information (transmitted at step 130) is transmitted with a higher repetition factor than the first control information (transmitted at step 120), and/or a higher power level than the first control information, and/or a lower code rate than the first control information. Such techniques may for example be employed to compensate for potential coverage loss caused by use of a smaller bandwidth.

In some example embodiments, the second downlink message (transmitted at step 150) may be transmitted more frequently than the first downlink message (transmitted at step 140).

In some example embodiments, the first downlink message (transmitted at step 140) may comprise configuration information for an initial bandwidth part (BWP) for a first type of wireless devices, and the second downlink message (transmitted at step 150) may comprise configuration information for an initial BWP for a second type of wireless devices. The second type of wireless devices may for example be bandwidth-restricted wireless devices, and the first type of wireless devices may for example be wireless devices capable of supporting larger bandwidths (such as the bandwidth of the set of control resource elements). The initial BWP for the second type of wireless devices may for example have a smaller bandwidth than the initial BWP for the first type of wireless devices.

In some example embodiments, the set of control resource elements indicated by the broadcast information (transmitted at step 110) may include a plurality of resource blocks (RB). A number of contiguous RBs from the plurality of RBs may be employed for transmitting the second control information at step 130. It will be appreciated that the contiguous RBs are contiguous in the frequency domain (or with respect to frequency).

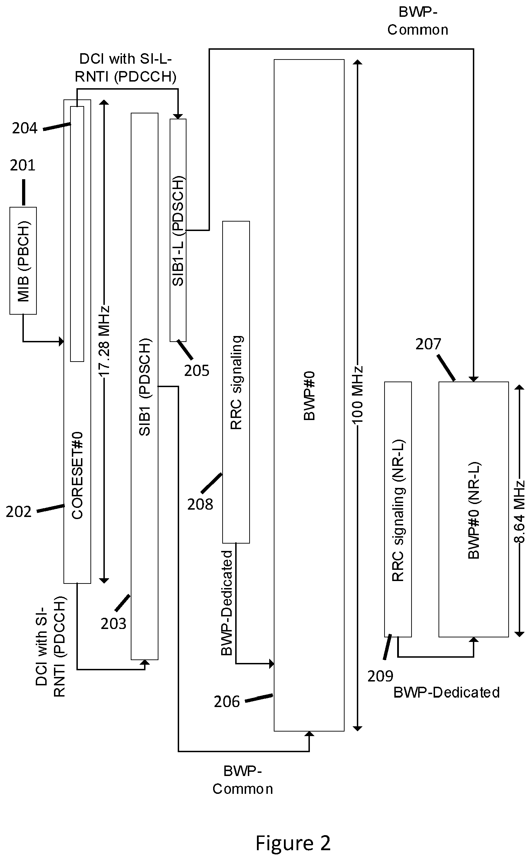

In an example implementation of the method 100, the broadcast information is transmitted 110 in a Physical Broadcast Channel (PBCH), and comprises a master information block (MIB). In the preset example implementation, the set of control resource elements is a control resource set number 0 (CORESET#0) indicated (or configured) by the MIB. In the preset example implementation, the first and second control information (transmitted at the steps 120 and 130) are respective downlink control information (DCI) transmitted in a Physical Downlink Control Channel (PDCCH). In the preset example implementation, the first downlink message (transmitted at step 140) is a system information block type 1 (SIB1) transmitted in a Physical Downlink Shared Channel (PDSCH). In the present example implementation, the second downlink message (transmitted at step 150) is also transmitted in PDSCH and may for example be a SIB adapted for NR-Light UEs. That SIB may for example be referred to as SIB1_L since it may replace the ordinary SIB1 for NR-Light UEs. This example implementation will be further described below with reference to Figures 2-3.

In the example implementation described above, the MIB may for example also indicate (or configure or define) a search space #0 associated with the CORESET#0, and scheduling of the SIB1 may be performed therein. The CORESET#0 and the search space #0 may correspond to common resources used for system access. The subset of the set or control resource elements (in which the second control information is transmitted at step 130) may for example be located in the search space #0. Alternatively, the subset of the set of control resource elements may be located in a second search space with a time offset relative to the search space #0. In other words, the second search space may have a different position in the time domain than the search space #0. The two search spaces may for example be disjoint, or they may be partially overlapping in the time domain. For example, the search space #0 may cover occurrences of the CORESET#0 in every second slot (such as slots 0, 2, 4 etc.) while the second search space may cover occurrences of the CORESET#0 in the other slots (such as slots 1, 3, 5 etc.).

Figure 2 shows an initial access solution for NR-Light UEs, according to an example implementation of the method 100. An NR cell may for example use MIB 201 to configure a CORESET#0 202 with a bandwidth of 17.28 MHz (this corresponds to step 110). For example, assume that the maximum of the NR-Light UE supported bandwidth is less than 17.28 MHz, for example 10 MHz. In this case, an NR-Light UE will not be able to receive a DCI carried in the PDCCH (this corresponds to step 120) and used for scheduling PDSCH for the transmission of SIB1 203, as currently the PDCCH carrying the DCI scrambled by the SI-RNTI may use the full span of CORESET#0 bandwidth. Without acquiring the SIB1 information 203, the UE cannot access the NR cell.

In addition to transmitting the legacy SIB1 information 203 (this corresponds to step 140) intended for legacy UEs or UEs supporting a bandwidth equal to or wider than the CORESET#0 bandwidth, the network transmits a SIB1-L 205 (this corresponds to step 150) which includes information specifically intended for NR-Light UEs Some of the information included in the legacy SIB1 message 203 may also be included in SIB1-L 205 if that information is relevant to NR-Light UEs. However, if the information in SIB1 203 is not relevant to NR-Light UEs, it does not need to be included in SIB1-L 205.

Similarly to the legacy SIB1 203, SIB1-L 205 is carried in PDSCH that is scheduled by a DCI carried in PDCCH. A subset 204 of the resource blocks configured for CORESET#0 202 may be used for transmission of the DCI (this corresponds to step 130) that schedules the PDSCH carrying SIB1-L 205. This subset 204 of resource blocks has a frequency span less than or equal to the maximum bandwidth supported by an NR-Light UE. The resource blocks used for transmitting the DCI that schedules SIB1-L 205 may for example be the lowest K (where K is some positive integer) contiguous resource blocks in the frequency dimension among the resource blocks allocated to CORESET#0 202. Alternatively, the resource blocks used for transmitting the DCI that schedules SIB1-L 205 may for example be the highest K contiguous resource blocks in the frequency dimension among the resource blocks allocated to CORESET#0 202. Yet another possibility may for example be that the resource blocks used for transmitting the DCI that schedules SIB1-L 205 are the middle K contiguous resource blocks in the frequency dimension among the resource blocks allocated to CORESET#0 202. The middle K contiguous resource blocks may for example start from a resource block index j and end at a resource block index j+K-1. Note here that having K contiguous resource blocks should be viewed as an example, not as a necessary limitation. In principle, the resource blocks used for transmitting the DCI that schedules SIB1-L 205 do not need to be contiguous. However, the frequency span should not exceed the maximum bandwidth supported by NR-Light UEs. The PDCCH that carries a DCI for scheduling SIB1-L 205 may for example be multiplexed (in time and/or frequency) with the PDCCH that carries a DCI for scheduling the conventional SIB1 203 as explained below. After the UE completes the initial access process, it can initiate a connection establishment procedure to move to the Connected Mode. During the connection establishment procedure, the network can use a UE-specific RRC signalling (denoted by 208 and 209 in Figure 2) to configure a UE-specific bandwidth part which is suitable to the UE's bandwidth capability.

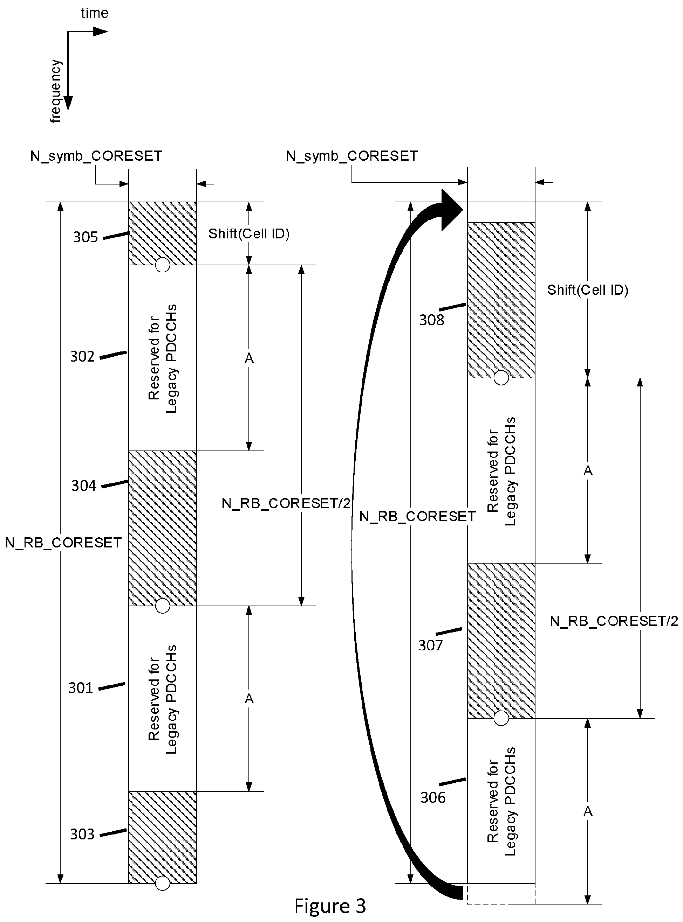

In a time occasion of CORESET#0 202 where a gNB wants to schedule a DCI for SIB-L 205, the gNB may for example decide, in general, to include also $N_{PDCCH}$ legacy PDCCH ($N_{PDCCH}$ can be an integer value larger than or equal to 0). In this case, according to the resource mapping of such PDCCHs in CORESET#0 202, two different configurations may occur, as depicted in Figure 3. Figure 3 shows representations of CORESET#0 when the resources for the first $N_{PDCCH}$ PDCCHs are reserved. On the left, two regions 301-302 are reserved for legacy PDCCH transmission and three regions 303-305 remain free for SIB-L DCI scheduling. Otherwise, as in the right side of Figure 3, the second region 306 reserved for legacy PDCCH can wrap around so that three regions are reserved for legacy PDCCH, and two equal regions 307-308 remain free for SIB-L DCI scheduling. It is assumed that the gNB reserves resources for the first $N_{PDCCH}$ PDCCHs (from index 0 to index $N_{PDCCH}$ -

In Figure 3, the following relation holds:

$$A = \frac{3 \cdot AL \cdot N_{PDCCH}}{N_{symb}^{CORESET}}$$

where A is the bandwidth of each reserved region in number of RBs (it must be integer since resources are reserved in multiples of 1 RB), $N_{symb}^{CORESET}$ (denoted by N_symb_CORESET in Figure 3) and $N_{RB}^{CORESET}$ (denoted by N_RB_CORESET in Figure 3) are respectively the duration in OFDM symbols and the bandwidth in Resource Blocks (RB) of CORESET#0, AL is the aggregation level of the legacy PDCCH and Shift(Cell$_{ID}$) in Figure 3 is a frequency offset applied by the interleaving which depends on the Cell ID. In order to have available resources for SIB-L DCI scheduling, the following inequality should hold

$$\frac{3 \cdot AL \cdot N_{PDCCH}}{N_{symb}^{CORESET}} < \frac{N_{RB}^{CORESET}}{2}$$

Notice that the frequency offsets, at which every reserved region begins, can be derived through the information contained in the MIB 201, therefore also an NR-Light UE with limited bandwidth can compute such frequency offsets and thus can be used as a common and known reference. There are rare cases where the resulting A is not an integer. These cases happen only when $AL = 1$ and $N_{PDCCH}$ is odd. For these cases, the two reserved regions are not of the same length. Two examples are given below.

In a first example, $AL = 1$, $N_{PDCCH} = 1$ and $N_{symb}^{CORESET} = 2$. In this case there is only one region of length 3 RBs.

In a second example, $AL = 1$, $N_{PDCCH} = 3$ and $N_{symb}^{CORESET} = 2$. In this case one region (containing 2 PDCCH) is of length 6 RBs, and the second region containing the third PDCCH is of length 3 RBs.

In some example embodiments, the PDCCH for SIB-L scheduling may be mapped in the K Resource Blocks before one of the aforementioned known frequency offsets, or at a known offset from the known frequency offset, where $K$ is such that the resulting frequency span is smaller or equal to the NR-L UE maximum bandwidth. Also, K can be hardcoded in the standard, or broadcasted to an NR-L UE in other ways. The NR-L UE can also perform a blind decoding considering all possible known frequency offsets, or the gNB can broadcast information to determine a subset (for example a single one) of the known frequency offsets that the UE has to consider.

In some example embodiments, the resource blocks used for transmitting the DCI that schedules SIB1-L 205 may change overtime. That is, K contiguous resource blocks may hop in the frequency domain at different time instances. The position of the K contiguous resource blocks may be determined by using system timing, for example a combination of one or more or all of the symbol index, slot index, subframe number, system frame number (SFN), and hyper-SFN. The value K of contiguous resource blocks can be hard coded in specification or determined from the bandwidth capability of a NR-Light UE.

In the time domain, in some example embodiments, NR-Light UEs may share the same Search Space #0 configuration as the legacy UEs. In other words, they may share the same monitoring locations in time as the legacy UEs. Alternatively, the Search Space for NR-Light UEs for acquiring the DCI that schedules SIB1-L 205 may have an offset in time relative to the Search Space #0 configured for legacy UEs. The offset in time may for example be equivalent to multiple slots, multiple subframes, or multiple frames. The PDSCH transmissions carrying SIB-L 205 may be allocated with a set of resource blocks which has a frequency span equal to or less than the maximum bandwidth supported by an NR-Light UE.

Reduced bandwidth of the CORESET, and/or lower capability of the NR-Light UE, and/or AL may reduce coverage. A way to compensate for this (or to recover at least some of the coverage) may be to use a smaller DCI to schedule SIB1-L 205. For example, the DCI employed to schedule SIB1-L 205 may be less than $X$ bits, where $X$ is a positive integer. Smaller DCI can achieve a lower code rate, which may improve the coverage. For example, less than 15 reserved bits (see Table 1 above) can be assumed in the DCI that is employed to schedule SIB1-L 205.

Along this line, some example embodiments involve using a new DCI format denoted by DCI 1_L for the scheduling of PDSCH. A new DCI format denoted by DCI 0_L for the scheduling of PUSCH for NR Light may for example also be used. The sizes of DCI 1_L and DCI 0_L can be aligned by padding if necessary. For NR-Light UEs, the DCI format 1_L may replace the role of DCI format 1_0 and the DCI format 0_L may replace the role of DCI format 0_0.

In some example embodiments, the DCI which schedules SIB1-L 205 may be transmitted with a higher repetition factor compared to the current DCI format 1_0 (with CRC scrambled by SI-RNTI) which is used to schedule SIB1 203 and other SIBs. This is to make up for reduced coverage resulting from lower capability of the NR-Light UE (for example reduced number of receive antennas) and/or a reduced AL due to that only a subset of the PRBs that is configured for CORESET#0 202 is used for the transmission of the DCI that schedules the PDSCH carrying SIB1-L 205. The size of the DCI which schedules SIB1-L 205 may for example be smaller than in the current DCI Format 1_0 (with CRC scrambled by SI-RNTI) which is used to schedule SIB1 203 and other SIBs. Therefore, a lower code rate can be achieved to make up for the reduced coverage. The DCI may for example be less than X bits, where X is a positive integer. The value of X may for example be 28 + $\left\lceil \log_2(N_{\text{RB}}^{\text{DL,BWP}}(N_{\text{RB}}^{\text{DL,BWP}}+1)/2) \right\rceil$, where $N_{\text{RB}}^{\text{DL,BWP}}$ is the maximum bandwidth part (BWP) bandwidth supported by NR light UE.

The following information (or a subset thereof) may for example be included in the DCI format 1_L:

- Identifier for DCI formats - 1 bits (The value of this bit field is always set to 1, indicating a DL DCI format)

- Frequency domain resource assignment - $\left\lceil \log_2(N_{RB}^{DL,BWP}(N_{RB}^{DL,BWP}+1)/2) \right\rceil$ bits

- Time domain resource assignment - 4 bits as defined in Subclause 5.1.2.1 of TS 38.214, v15.7

- VRB-to-PRB mapping - 1 bit according to Table 7.3.1.2.2-5 in TS 38.212, v15.7

- Modulation and coding scheme - 5 bits as defined in Subclause 5.1.3 of TS 38.214, v15.7

- New data indicator - 1 bit

- Redundancy version - 2 bits as defined in Table 7.3.1.1.1-2 in TS 38.212, v15.7

- HARQ process number - 4 bits

- Downlink assignment index - 2 bits as defined in Subclause 9.1.3 of TS 38.213, v15.7, as counter DAI

- TPC command for scheduled PUCCH - 2 bits as defined in Subclause 7.2.1 of TS 38.213, v15.7

- PUCCH resource indicator - 3 bits as defined in Subclause 9.2.3 of TS 38.213, v15.7

- PDSCH-to-HARQ feedback timing indicator - 3 bits as defined in Subclause 9.2.3 of TS38.213, v15.7

In some example embodiments, one or both of the PDCCH scheduling the SIB1-L 205, and the PDSCH carrying SIB1-L 205 may be power boosted relative to a reference power level configured for a reference channel or signal. The reference power level may for example be determined by a PSS, SSS, PBCH or demodulation reference signal (DMRS) transmission. The level of the power boosting may for example be indicated using broadcast signalling, for example using the PBCH.

In some example embodiments, SIB1-L 205 may be transmitted more frequently than SIB1 203. Ether the DCI that schedules the SIB1-L 205 may indicate a number of repetitions for SIB1-L 205, or SIB1-L 205 may be scheduled and transmitted more frequently than SIB1 203 in the time domain.

In some example embodiments, SIB1 203 may include configuration information of the initial bandwidth part (BWP) 206 for ordinary/legacy UEs. In some example embodiments, SIB1-L 205 may include configuration information of the initial BWP 207 for NR-Light UEs. The initial BWP configuration for NR-Light UEs may be different from that for legacy UEs. For example, the bandwidth of the initial BWP configuration for NR-Light UEs may be smaller than that for legacy UEs.

In some example embodiments, the DCI that schedules the PDSCH carrying SIB1-L 205 may be masked with a special RNTI that is different from the legacy SI-RNTI used for SIB scheduling. This special RNTI may for example be referred to as SI-L-RNTI. That is, in order not to compromise the performance of legacy UEs or UEs supporting a bandwidth equal to or wider than the CORESET#0 bandwidth, these UEs should not act on the scheduling of the new SIB1-L 205. Masking the scheduling with the new SI-L-RNTI is one way to achieve this. Another way to achieve this is to have disjoint search spaces for legacy UEs and NR-Light UEs.

In some example embodiments, the DCI that schedules the PDSCH carrying SIB1-L 205 may be signalled by using a reserved bit. A legacy UE would ignore this bit, as it is reserved from the legacy UE's perspective. Rel-17+ UEs would understand this field, denoted by SIB1-L Indicator in the table below, and would act accordingly. For example, if the SIB1-L Indicator indicates that this DCI schedules SIB1-L, the UE should ignore the System Information Indicator field.

| System Information Indicator | 1 bit | 0 : SIB 1 <br> 1 : SI messages |
|---|---|---|
| SIB1-L Indicator | 1 bit | 0 : not for scheduling SIB1-L <br> 1 : for scheduling SIB1-L. In this case, UE ignores the System Information Indicator field |
| Reserved | 14 bits | Reserved |

At least some of the example embodiments described above employ the example of using CORESET#0 for decoding the SIB1 (and SIB1-L) transmission. However, the approaches and ideas presented in such example embodiments may are also be applicable to other uses of CORESET#0, such as any PDCCH monitoring in RRC_IDLE or RRC_INACTIVE before the UE identity and capability is known. That is, Random Access, paging, and SI acquisition, for example the scheduling of Msg2 (and Msg4 when the UE is in RRC_IDLE) of the Random Access procedure containing random access response (RAR).

For paging there are two types of paging in NR: RAN paging in RRC_INACTIVE (gNB controlled) and paging in RRC_IDLE (AMF controlled). For the former, the UE_ID and the UE capabilities will be known so gNB can adapt the paging to the CORESET and BWP specifically configured for the UE. For the latter, however, the UE_ID is unknown to the gNB and therefore it cannot know if the UE is a legacy UE or a NR-Light UE (this since Core Network identifiers are transparent to gNB and for example S-TMSI can be updated, for security reasons etc., without the gNB knowing). In some example embodiments, a new 'NR-Light indication' may therefore be added to the UE context stored in AMF, and upon paging this indication may be appended to the paging message from AMF to gNB. From this indication, gNB could then determine which CORESET should be applied when paging the UE (use CORESET#0 or limit to a CORESET bandwidth which NR-Light UEs are capable of handling).

As described above, in addition to transmitting the legacy SIB1 information intended for legacy UEs or UEs supporting a bandwidth equal to or wider than the CORESET#0 bandwidth, the network (or a network node) may transmit a new message SIB1-L which includes information specifically intended for NR-Light UEs Some of the information included in the legacy SIB1 message may also be duplicated in SIB1-L 205 if that information is relevant to NR-Light UEs.

In some example embodiments, a subset of the resource blocks configured for CORESET#0 202 may be used for the transmissions of the DCI that schedules the PDSCH carrying SIB1-L 205. This subset of PRBs may have a frequency span less than or equal to the maximum bandwidth supported by an NR-Light UE.

In some example embodiments, the DCI that schedules the PDSCH carrying SIB1-L 205 may be masked with a special RNTI that is different from the legacy SI-RNTI used for SIB scheduling. This special RNTI is referred to as SI-L-RNTI in connection with the description of some example embodiments.

In some example embodiments, the DCI which schedules SIB1-L 205 may be transmitted with a higher repetition factor, and/or a higher power level (that is, power boosting), and/or a lower DCI size, and/or a lower code rate compared to the current DCI format 1_0 with CRC scrambled by SI-RNTI which is used to schedule SIB1 203 and other SIBs.

In some example embodiments, SIB1-L may be transmitted more frequently than SIB1. Either the DCI that schedules the SIB1-L 205 can indicate the number of repetitions for SIB1-L 205, or SIB1-L 205 can be scheduled and transmitted more frequently than SIB1 203 in the time domain.

In some example embodiments, the SIB1-L 205 may include configuration information of the initial bandwidth part (BWP) for NR-Light UEs. The initial BWP configuration for NR-Light UEs may be different from that for legacy UEs. For example, the bandwidth of the initial BWP configuration for NR-Light UEs may be smaller than that for legacy UEs.

In some example embodiments, a new "NR-Light indication" may be added to the UE context stored in AMF, and upon paging this indication may be appended to the paging message from AMF to the NR base station (gNB).

Figure 4 is a flow chart of a method 400 performed by a wireless device, according to an embodiment. The wireless device performing the method 400 is communicating with a network node performing the method 100 described above with reference to Figure 1. The method 400 comprises receiving 410 broadcast information (transmitted at step 110 in the method 100) which indicates a set of control resource elements for downlink transmission of first control information (transmitted at step 120 in the method 100). The first control information schedules a first downlink message (transmitted at step 140 in the method 100). The method 400 comprises receiving second control information (transmitted at step 130 in the method 100) in a subset of the set of control resource elements. The subset of the set of control resource elements has a smaller bandwidth than the set of control resource elements. The second control information schedules a second downlink message (transmitted at step 150 in the method 100).

The wireless device performing the method 400 may be any type of device which is able to communicate wirelessly with a network node and/or with another wireless device. The wireless device may for example be a user equipment (UE), a terminal device, a machine type communication (MTC) device, or a device capable of machine-to-machine (M2M) communication. Examples of wireless devices include, but are not limited to, smart phones, tablet computers, and USB dongles. The wireless device may for example employ one or more radio access technologies such as Bluetooth, Wi-Fi, GSM, UMTS, LTE, or NR to communicate with a network node.

It will be appreciated that wireless device performing the method 400 may not necessarily receive the first control information transmitted at step 120 and the first downlink message transmitted at step 140. The wireless device may for example not be able to support the bandwidth of the set of control resource elements in which the first control information is transmitted at step 120. It may therefore not be able to receive the first control information, and may therefore not be able to receive the first downlink message either. The wireless device may for example be a bandwidth-restricted wireless device such as a NR-Light UE. However, the wireless device could also be an ordinary NR UE that would be able to handle the first control information transmitted at step 120, but which nevertheless uses a narrower frequency range to receive the second control information (transmitted at step 130), for example to save power compared to using a larger bandwidth to receive the first control information.

The method 400 may optionally comprise receiving 450 the second downlink message.

According to some example embodiments, the receiving 420 of the second control information may be performed in response to receipt of an indication that the second control information is present. In other words, the wireless device may only attempt to receive 420 the second control information if it receives 430 an indication that the second control information is actually present. If the wireless device receives an indication that the second control information is not present, it may for example attempt to connect to a different network node than from which the broadcast information was received, and/or search for a different cell (than the cell to which the network node belongs) in the same or different carrier frequency.

However, embodiments may also be envisaged in which the wireless device may attempt to receive 420 the second control information without waiting for an indication that the second control information is actually present.

According to some example embodiments, the receiving 450 of the second downlink message may be performed in response to receipt of an indication that the second control information is for use by a bandwidth-restricted wireless device. In other words, the wireless device may only attempt to receive 450 the second downlink message if it receives 440 an indication that the second control information is intended/suitable for use by a bandwidth-restricted wireless device. If the wireless device receives an indication that the second control information is not for use by a bandwidth-restricted wireless device, the wireless device may for example attempt to connect to a different network node than from which the broadcast information was received, and/or search for a different cell (than the cell to which the network node belongs) in the same or different carrier frequency.

However, embodiments may also be envisaged in which the wireless device may attempt to receive 450 the second downlink message without waiting for an indication that the second control information is actually intended for a bandwidth-restricted wireless device.

According to some example embodiments, the subset of the set of control resource elements (in which the second control information is received at step 420) has a bandwidth no larger than the bandwidth supported by the wireless device.

According to some example embodiments, the method 400 may comprise receiving an indication of a time and/or frequency location of the subset of the set of control resource elements. The wireless device may for example employ such an indication to determine where to attempt to receive 420 the second control information.

According to some example embodiments, the method 400 may comprise receiving an indication of a size with respect to time and/or frequency of the subset of the set of control resource elements. The wireless device may for example employ such an indication to determine where to attempt to receive 420 the second control information.

The broadcast information, the first and second control information, the first and second downlink messages etc. in the method 400 may for example be in accordance with the example embodiments and example implementations of the method 100 described above with reference to Figures 1-3. For example, in an example implementation, the broadcast information is received 110 in a Physical Broadcast Channel (PBCH), and comprises a master information block (MIB). In the preset example implementation, the set of control resource elements is a CORESET#0 indicated (or configured, or defined) by the MIB. In the preset example implementation, the first and second control information are respective DCI provided in a PDCCH. In the preset example implementation, the first downlink message is a SIB1 provided in a PDSCH. In the present implementation, the second downlink message is also provided in PDSCH and may for example comprise a SIB adapted for NR-Light UEs. That SIB may be referred to as SIB1_L since it may replace the ordinary SIB1 for NR-Light UEs.

Embodiments of network nodes, wireless devices, computer programs etc.

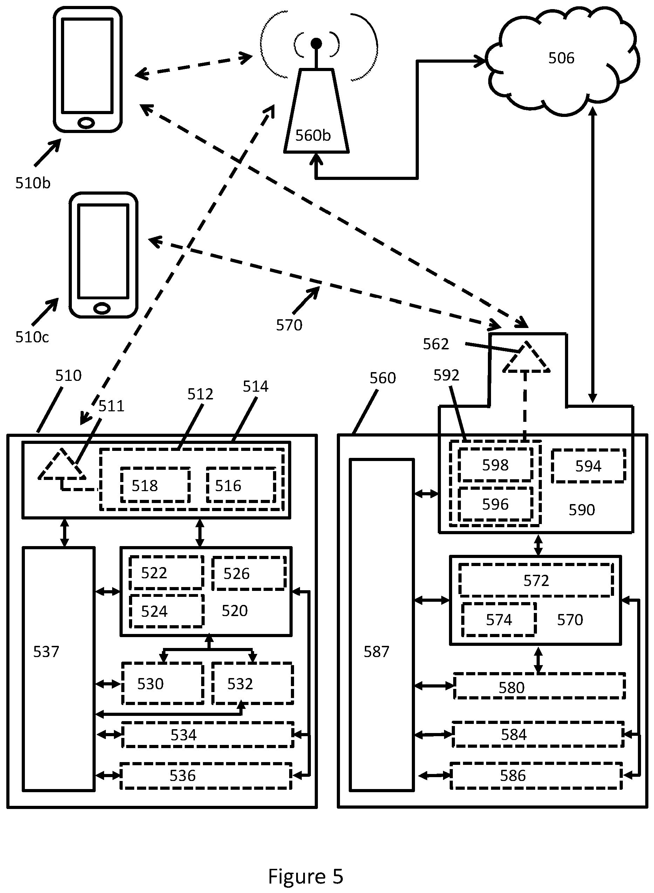

The methods of operating a network node, described above with reference to Figure 1, represent a first aspect of the present disclosure. Figure 5 shows a wireless network, and will be further described in the next section. The network nodes 560 and 560b described below with reference to Figure 5 represent a second aspect of the present disclosure. The network node 560 (or the processing circuitry 570 of the network node 560) may for example be configured to perform the method of any of the embodiments of the first aspect described herein. The network node 560 (or the processing circuitry 570 of the network node 560) may for example be configured to perform the method 100 described above with reference to Figure 1.

According to an embodiment, the network node 560 may comprise processing circuitry 570 and a memory 580 (or a device-readable medium) containing instructions executable by the processing circuitry 570 whereby the network node 560 is operative to perform the method of any of the embodiments of the first aspect described above.

It will be appreciated that a non-transitory computer-readable medium, such as for example the device-readable medium 580, may store instructions which, when executed by a computer (or by processing circuitry such as 570), cause the computer (or the processing circuitry 570) to perform the method of any of the embodiments of the first aspect described above. It will also be appreciated that a non-transitory computer-readable medium 580 storing such instructions need not necessarily be comprised in a network node 560. On the contrary, such a non-transitory computer-readable medium 580 could be provided on its own, for example at a location remote from the network node 560.

It will be appreciated that the network node 560 need not necessarily comprise all those components described below with reference to Figure 5. For a network node 560 according to an embodiment of the second aspect, it is sufficient that the network node 560 comprises means for performing the steps of the method of the corresponding embodiment of the first aspect.

Similarly, it will be appreciated that the processing circuitry 570 need not necessarily comprise all those components described below with reference to Figure 5.

The methods of operating a wireless device, described above with reference to Figure 4 represent a third aspect of the present disclosure. The wireless devices 510, 510b and 510c described below with reference to Figure 5 are examples of wireless devices, and represent a fourth aspect of the present disclosure. The wireless device 510 (or the processing circuitry 520 of the wireless device 510) may for example be configured to perform the method of any of the embodiments of the third aspect described above. The wireless device 510 (or the processing circuitry 520 of the wireless device 510) may for example be configured to perform the method 400 described above with reference to Figure 4.

According to an embodiment, the wireless device 510 may comprise processing circuitry 520 and a memory 530 (or a device-readable medium) containing instructions executable by the processing circuitry 520 whereby the wireless device 510 is operative to perform the method of any of the embodiments of the third aspect described herein.

It will be appreciated that a non-transitory computer-readable medium, such as for example the device-readable medium 530, may store instructions which, when executed by a computer (or by processing circuitry such as 520), cause the computer (or the processing circuitry 520) to perform the method of any of the embodiments of the third aspect described herein. It will also be appreciated that a non-transitory computer-readable medium 530 storing such instructions need not necessarily be comprised in a wireless device 510. On the contrary, such a non-transitory computer-readable medium 530 could be provided on its own, for example at a location remote from the wireless device 510.

It will be appreciated that the wireless device 510 need not necessarily comprise all those components described below with reference to Figure 5. For a wireless device 510 according to an embodiment of the fourth aspect, it is sufficient that the wireless device 510 comprises means for performing the steps of the method of the corresponding embodiment of the fourth aspect.

Similarly, it will be appreciated that the processing circuitry 520 need not necessarily comprise all those components described below with reference to Figure 5.

Additional explanation

Although the subject matter described herein may be implemented in any appropriate type of system using any suitable components, the embodiments disclosed herein are described in relation to a wireless network, such as the example wireless network illustrated in Figure 5. For simplicity, the wireless network of Figure 5 only depicts network 506, network nodes 560 and 560b, and WDs 510, 510b, and 510c. In practice, a wireless network may further include any additional elements suitable to support communication between wireless devices or between a wireless device and another communication device, such as a landline telephone, a service provider, or any other network node or end device. Of the illustrated components, network node 560 and wireless device (WD) 510 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 506 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 560 and WD 510 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 5, network node 560 includes processing circuitry 570, device readable medium 580, interface 590, auxiliary equipment 584, power source 586, power circuitry 587, and antenna 562. Although network node 560 illustrated in the example wireless network of Figure 5 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 560 are depicted as single boxes located within a larger box, or nested within multiple boxes, in practice, a network node may comprise multiple different physical components that make up a single illustrated component (e.g., device readable medium 580 may comprise multiple separate hard drives as well as multiple RAM modules).

Similarly, network node 560 may be composed of multiple physically separate components (e.g., a NodeB component and a RNC component, or a BTS component and a BSC component, etc.), which may each have their own respective components. In certain scenarios in which network node 560 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 560 may be configured to support multiple radio access technologies (RATs). In such embodiments, some components may be duplicated (e.g., separate device readable medium 580 for the different RATs) and some components may be reused (e.g., the same antenna 562 may be shared by the RATs). Network node 560 may also include multiple sets of the various illustrated components for different wireless technologies integrated into network node 560, such as, for example, GSM, WCDMA, LTE, NR, WiFi, or Bluetooth wireless technologies. These wireless technologies may be integrated into the same or different chip or set of chips and other components within network node 560.

Processing circuitry 570 is configured to perform any determining, calculating, or similar operations (e.g., certain obtaining operations) described herein as being provided by a network node. These operations performed by processing circuitry 570 may include processing information obtained by processing circuitry 570 by, for example, converting the obtained information into other information, comparing the obtained information or converted information to information stored in the network node, and/or performing one or more operations based on the obtained information or converted information, and as a result of said processing making a determination.

Processing circuitry 570 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 560 components, such as device readable medium 580, network node 560 functionality. For example, processing circuitry 570 may execute instructions stored in device readable medium 580 or in memory within processing circuitry 570. Such functionality may include providing any of the various wireless features, functions, or benefits discussed herein. In some embodiments, processing circuitry 570 may include a system on a chip (SOC).

In some embodiments, processing circuitry 570 may include one or more of radio frequency (RF) transceiver circuitry 572 and baseband processing circuitry 574. In some embodiments, radio frequency (RF) transceiver circuitry 572 and baseband processing circuitry 574 may be on separate chips (or sets of chips), boards, or units, such as radio units and digital units. In alternative embodiments, part or all of RF transceiver circuitry 572 and baseband processing circuitry 574 may be on the same chip or set of chips, boards, or units

In certain embodiments, some or all of the functionality described herein as being provided by a network node, base station, eNB or other such network device may be performed by processing circuitry 570 executing instructions stored on device readable medium 580 or memory within processing circuitry 570. In alternative embodiments, some or all of the functionality may be provided by processing circuitry 570 without executing instructions stored on a separate or discrete device readable medium, such as in a hard-wired manner. In any of those embodiments, whether executing instructions stored on a device readable storage medium or not, processing circuitry 570 can be configured to perform the described functionality. The benefits provided by such functionality are not limited to processing circuitry 570 alone or to other components of network node 560, but are enjoyed by network node 560 as a whole, and/or by end users and the wireless network generally.

Device readable medium 580 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 570. Device readable medium 580 may store any suitable instructions, data or information, including a computer program, software, an application including one or more of logic, rules, code, tables, etc. and/or other instructions capable of being executed by processing circuitry 570 and, utilized by network node 560. Device readable medium 580 may be used to store any calculations made by processing circuitry 570 and/or any data received via interface 590. In some embodiments, processing circuitry 570 and device readable medium 580 may be considered to be integrated.

Interface 590 is used in the wired or wireless communication of signalling and/or data between network node 560, network 506, and/or WDs 510. As illustrated, interface 590 comprises port(s)/terminal(s) 594 to send and receive data, for example to and from network 506 over a wired connection. Interface 590 also includes radio front end circuitry 592 that may be coupled to, or in certain embodiments a part of, antenna 562. Radio front end circuitry 592 comprises filters 598 and amplifiers 596. Radio front end circuitry 592 may be connected to antenna 562 and processing circuitry 570. Radio front end circuitry may be configured to condition signals communicated between antenna 562 and processing circuitry 570. Radio front end circuitry 592 may receive digital data that is to be sent out to other network nodes or WDs via a wireless connection. Radio front end circuitry 592 may convert the digital data into a radio signal having the appropriate channel and bandwidth parameters using a combination of filters 598 and/or amplifiers 596. The radio signal may then be transmitted via antenna 562. Similarly, when receiving data, antenna 562 may collect radio signals which are then converted into digital data by radio front end circuitry 592. The digital data may be passed to processing circuitry 570. In other embodiments, the interface may comprise different components and/or different combinations of components.

In certain alternative embodiments, network node 560 may not include separate radio front end circuitry 592, instead, processing circuitry 570 may comprise radio front end circuitry and may be connected to antenna 562 without separate radio front end circuitry 592. Similarly, in some embodiments, all or some of RF transceiver circuitry 572 may be considered a part of interface 590. In still other embodiments, interface 590 may include one or more ports or terminals 594, radio front end circuitry 592, and RF transceiver circuitry 572, as part of a radio unit (not shown), and interface 590 may communicate with baseband processing circuitry 574, which is part of a digital unit (not shown).

Antenna 562 may include one or more antennas, or antenna arrays, configured to send and/or receive wireless signals. Antenna 562 may be coupled to radio front end circuitry 590 and may be any type of antenna capable of transmitting and receiving data and/or signals wirelessly. In some embodiments, antenna 562 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 562 may be separate from network node 560 and may be connectable to network node 560 through an interface or port.

Antenna 562, interface 590, and/or processing circuitry 570 may be configured to perform any receiving operations and/or certain obtaining operations described herein as being performed by a network node. Any information, data and/or signals may be received from a wireless device, another network node and/or any other network equipment. Similarly, antenna 562, interface 590, and/or processing circuitry 570 may be configured to perform any transmitting operations described herein as being performed by a network node. Any information, data and/or signals may be transmitted to a wireless device, another network node and/or any other network equipment.

Power circuitry 587 may comprise, or be coupled to, power management circuitry and is configured to supply the components of network node 560 with power for performing the functionality described herein. Power circuitry 587 may receive power from power source 586. Power source 586 and/or power circuitry 587 may be configured to provide power to the various components of network node 560 in a form suitable for the respective components (e.g., at a voltage and current level needed for each respective component). Power source 586 may either be included in, or external to, power circuitry 587 and/or network node 560. For example, network node 560 may be connectable to an external power source (e.g., an electricity outlet) via an input circuitry or interface such as an electrical cable, whereby the external power source supplies power to power circuitry 587. As a further example, power source 586 may comprise a source of power in the form of a battery or battery pack which is connected to, or integrated in, power circuitry 587. The battery may provide backup power should the external power source fail. Other types of power sources, such as photovoltaic devices, may also be used.

Alternative embodiments of network node 560 may include additional components beyond those shown in Figure 5 that may be responsible for providing certain aspects of the network node's functionality, including any of the functionality described herein and/or any functionality necessary to support the subject matter described herein. For example, network node 560 may include user interface equipment to allow input of information into network node 560 and to allow output of information from network node 560. This may allow a user to perform diagnostic, maintenance, repair, and other administrative functions for network node 560.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 510 includes antenna 511, interface 514, processing circuitry 520, device readable medium 530, user interface equipment 532, auxiliary equipment 534, power source 536 and power circuitry 537. WD 510 may include multiple sets of one or more of the illustrated components for different wireless technologies supported by WD 510, such as, for example, GSM, WCDMA, LTE, NR, WiFi, WiMAX, or Bluetooth wireless technologies, just to mention a few. These wireless technologies may be integrated into the same or different chips or set of chips as other components within WD 510.

Antenna 511 may include one or more antennas or antenna arrays, configured to send and/or receive wireless signals, and is connected to interface 514. In certain alternative embodiments, antenna 511 may be separate from WD 510 and be connectable to WD 510 through an interface or port. Antenna 511, interface 514, and/or processing circuitry 520 may be configured to perform any receiving or transmitting operations described herein as being performed by a WD. Any information, data and/or signals may be received from a network node and/or another WD. In some embodiments, radio front end circuitry and/or antenna 511 may be considered an interface.

As illustrated, interface 514 comprises radio front end circuitry 512 and antenna 511. Radio front end circuitry 512 comprise one or more filters 518 and amplifiers 516. Radio front end circuitry 514 is connected to antenna 511 and processing circuitry 520, and is configured to condition signals communicated between antenna 511 and processing circuitry 520. Radio front end circuitry 512 may be coupled to or a part of antenna 511. In some embodiments, WD 510 may not include separate radio front end circuitry 512; rather, processing circuitry 520 may comprise radio front end circuitry and may be connected to antenna 511. Similarly, in some embodiments, some or all of RF transceiver circuitry 522 may be considered a part of interface 514. Radio front end circuitry 512 may receive digital data that is to be sent out to other network nodes or WDs via a wireless connection. Radio front end circuitry 512 may convert the digital data into a radio signal having the appropriate channel and bandwidth parameters using a combination of filters 518 and/or amplifiers 516. The radio signal may then be transmitted via antenna 511. Similarly, when receiving data, antenna 511 may collect radio signals which are then converted into digital data by radio front end circuitry 512. The digital data may be passed to processing circuitry 520. In other embodiments, the interface may comprise different components and/or different combinations of components.

Processing circuitry 520 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 510 components, such as device readable medium 530, WD 510 functionality. Such functionality may include providing any of the various wireless features or benefits discussed herein. For example, processing circuitry 520 may execute instructions stored in device readable medium 530 or in memory within processing circuitry 520 to provide the functionality disclosed herein.

As illustrated, processing circuitry 520 includes one or more of RF transceiver circuitry 522, baseband processing circuitry 524, and application processing circuitry 526. In other embodiments, the processing circuitry may comprise different components and/or different combinations of components. In certain embodiments processing circuitry 520 of WD 510 may comprise a SOC. In some embodiments, RF transceiver circuitry 522, baseband processing circuitry 524, and application processing circuitry 526 may be on separate chips or sets of chips. In alternative embodiments, part or all of baseband processing circuitry 524 and application processing circuitry 526 may be combined into one chip or set of chips, and RF transceiver circuitry 522 may be on a separate chip or set of chips. In still alternative embodiments, part or all of RF transceiver circuitry 522 and baseband processing circuitry 524 may be on the same chip or set of chips, and application processing circuitry 526 may be on a separate chip or set of chips. In yet other alternative embodiments, part or all of RF transceiver circuitry 522, baseband processing circuitry 524, and application processing circuitry 526 may be combined in the same chip or set of chips. In some embodiments, RF transceiver circuitry 522 may be a part of interface 514. RF transceiver circuitry 522 may condition RF signals for processing circuitry 520.

In certain embodiments, some or all of the functionality described herein as being performed by a WD may be provided by processing circuitry 520 executing instructions stored on device readable medium 530, which in certain embodiments may be a computer-readable storage medium. In alternative embodiments, some or all of the functionality may be provided by processing circuitry 520 without executing instructions stored on a separate or discrete device readable storage medium, such as in a hard-wired manner. In any of those particular embodiments, whether executing instructions stored on a device readable storage medium or not, processing circuitry 520 can be configured to perform the described functionality. The benefits provided by such functionality are not limited to processing circuitry 520 alone or to other components of WD 510, but are enjoyed by WD 510 as a whole, and/or by end users and the wireless network generally.

Processing circuitry 520 may be configured to perform any determining, calculating, or similar operations (e.g., certain obtaining operations) described herein as being performed by a WD. These operations, as performed by processing circuitry 520, may include processing information obtained by processing circuitry 520 by, for example, converting the obtained information into other information, comparing the obtained information or converted information to information stored by WD 510, and/or performing one or more operations based on the obtained information or converted information, and as a result of said processing making a determination.

Device readable medium 530 may be operable to store a computer program, software, an application including one or more of logic, rules, code, tables, etc. and/or other instructions capable of being executed by processing circuitry 520. Device readable medium 530 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 520. In some embodiments, processing circuitry 520 and device readable medium 530 may be considered to be integrated.

User interface equipment 532 may provide components that allow for a human user to interact with WD 510. Such interaction may be of many forms, such as visual, audial, tactile, etc. User interface equipment 532 may be operable to produce output to the user and to allow the user to provide input to WD 510. The type of interaction may vary depending on the type of user interface equipment 532 installed in WD 510. For example, if WD 510 is a smart phone, the interaction may be via a touch screen; if WD 510 is a smart meter, the interaction may be through a screen that provides usage (e.g., the number of gallons used) or a speaker that provides an audible alert (e.g., if smoke is detected). User interface equipment 532 may include input interfaces, devices and circuits, and output interfaces, devices and circuits. User interface equipment 532 is configured to allow input of information into WD 510, and is connected to processing circuitry 520 to allow processing circuitry 520 to process the input information. User interface equipment 532 may include, for example, a microphone, a proximity or other sensor, keys/buttons, a touch display, one or more cameras, a USB port, or other input circuitry. User interface equipment 532 is also configured to allow output of information from WD 510, and to allow processing circuitry 520 to output information from WD 510. User interface equipment 532 may include, for example, a speaker, a display, vibrating circuitry, a USB port, a headphone interface, or other output circuitry. Using one or more input and output interfaces, devices, and circuits, of user interface equipment 532, WD 510 may communicate with end users and/or the wireless network, and allow them to benefit from the functionality described herein.

Auxiliary equipment 534 is operable to provide more specific functionality which may not be generally performed by WDs. This may comprise specialized sensors for doing measurements for various purposes, interfaces for additional types of communication such as wired communications etc. The inclusion and type of components of auxiliary equipment 534 may vary depending on the embodiment and/or scenario.

Power source 536 may, in some embodiments, be in the form of a battery or battery pack. Other types of power sources, such as an external power source (e.g., an electricity outlet), photovoltaic devices or power cells, may also be used. WD 510 may further comprise power circuitry 537 for delivering power from power source 536 to the various parts of WD 510 which need power from power source 536 to carry out any functionality described or indicated herein. Power circuitry 537 may in certain embodiments comprise power management circuitry. Power circuitry 537 may additionally or alternatively be operable to receive power from an external power source; in which case WD 510 may be connectable to the external power source (such as an electricity outlet) via input circuitry or an interface such as an electrical power cable. Power circuitry 537 may also in certain embodiments be operable to deliver power from an external power source to power source 536. This may be, for example, for the charging of power source 536. Power circuitry 537 may perform any formatting, converting, or other modification to the power from power source 536 to make the power suitable for the respective components of WD 510 to which power is supplied.

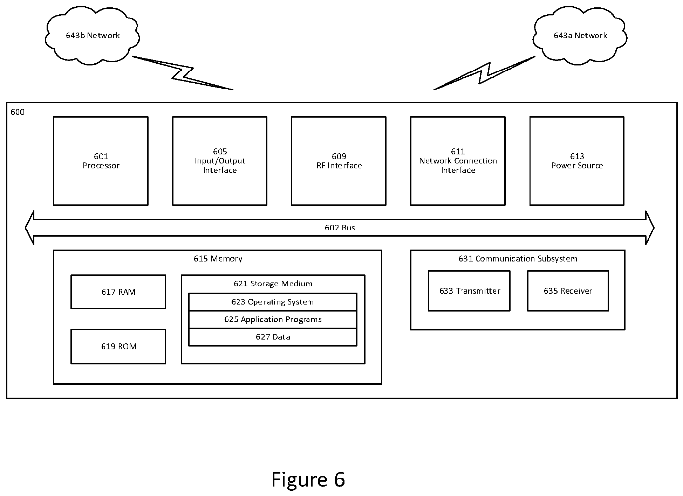

Figure 6 illustrates one embodiment of a UE 600 in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 600 may be any UE identified by the 3rd Generation Partnership Project (3GPP), including a NB-loT UE, a machine type communication (MTC) UE, and/or an enhanced MTC (eMTC) UE. UE 600, as illustrated in Figure 6, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 6 is a UE, the components discussed herein are equally applicable to a WD, and vice-versa.

In Figure 6, UE 600 includes processing circuitry 601 that is operatively coupled to input/output interface 605, radio frequency (RF) interface 609, network connection interface 611, memory 615 including random access memory (RAM) 617, read-only memory (ROM) 619, and storage medium 621 or the like, communication subsystem 631, power source 633, and/or any other component, or any combination thereof. Storage medium 621 includes operating system 623, application program 625, and data 627. In other embodiments, storage medium 621 may include other similar types of information. Certain UEs may utilize all of the components shown in Figure 6, or only a subset of the components. The level of integration between the components may vary from one UE to another UE. Further, certain UEs may contain multiple instances of a component, such as multiple processors, memories, transceivers, transmitters, receivers, etc.

In Figure 6, processing circuitry 601 may be configured to process computer instructions and data. Processing circuitry 601 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 601 may include two central processing units (CPUs). Data may be information in a form suitable for use by a computer.

In the depicted embodiment, input/output interface 605 may be configured to provide a communication interface to an input device, output device, or input and output device. UE 600 may be configured to use an output device via input/output interface 605. An output device may use the same type of interface port as an input device. For example, a USB port may be used to provide input to and output from UE 600. The output device may be a speaker, a sound card, a video card, a display, a monitor, a printer, an actuator, an emitter, a smartcard, another output device, or any combination thereof. UE 600 may be configured to use an input device via input/output interface 605 to allow a user to capture information into UE 600. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 6, RF interface 609 may be configured to provide a communication interface to RF components such as a transmitter, a receiver, and an antenna. Network connection interface 611 may be configured to provide a communication interface to network 643a. Network 643a may encompass wired and/or wireless networks such as a local-area network (LAN), a wide-area network (WAN), a computer network, a wireless network, a telecommunications network, another like network or any combination thereof. For example, network 643a may comprise a Wi-Fi network. Network connection interface 611 may be configured to include a receiver and a transmitter interface used to communicate with one or more other devices over a communication network according to one or more communication protocols, such as Ethernet, TCP/IP, SONET, ATM, or the like. Network connection interface 611 may implement receiver and transmitter functionality appropriate to the communication network links (e.g., optical, electrical, and the like). The transmitter and receiver functions may share circuit components, software or firmware, or alternatively may be implemented separately.

RAM 617 may be configured to interface via bus 602 to processing circuitry 601 to provide storage or caching of data or computer instructions during the execution of software programs such as the operating system, application programs, and device drivers. ROM 619 may be configured to provide computer instructions or data to processing circuitry 601. For example, ROM 619 may be configured to store invariant low-level system code or data for basic system functions such as basic input and output (I/O), startup, or reception of keystrokes from a keyboard that are stored in a non-volatile memory. Storage medium 621 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 621 may be configured to include operating system 623, application program 625 such as a web browser application, a widget or gadget engine or another application, and data file 627. Storage medium 621 may store, for use by UE 600, any of a variety of various operating systems or combinations of operating systems.

Storage medium 621 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 621 may allow UE 600 to access computer-executable instructions, application programs or the like, stored on transitory or non-transitory memory media, to off-load data, or to upload data. An article of manufacture, such as one utilizing a communication system may be tangibly embodied in storage medium 621, which may comprise a device readable medium.

In Figure 6, processing circuitry 601 may be configured to communicate with network 643b using communication subsystem 631. Network 643a and network 643b may be the same network or networks or different network or networks. Communication subsystem 631 may be configured to include one or more transceivers used to communicate with network 643b. For example, communication subsystem 631 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 633 and/or receiver 635 to implement transmitter or receiver functionality, respectively, appropriate to the RAN links (e.g., frequency allocations and the like). Further, transmitter 633 and receiver 635 of each transceiver may share circuit components, software or firmware, or alternatively may be implemented separately.

In the illustrated embodiment, the communication functions of communication subsystem 631 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 631 may include cellular communication, Wi-Fi communication, Bluetooth communication, and GPS communication. Network 643b may encompass wired and/or wireless networks such as a local-area network (LAN), a wide-area network (WAN), a computer network, a wireless network, a telecommunications network, another like network or any combination thereof. For example, network 643b may be a cellular network, a Wi-Fi network, and/or a near-field network. Power source 613 may be configured to provide alternating current (AC) or direct current (DC) power to components of **UE** 600.

The features, benefits and/or functions described herein may be implemented in one of the components of UE 600 or partitioned across multiple components of **UE** 600. Further, the features, benefits, and/or functions described herein may be implemented in any combination of hardware, software or firmware. In one example, communication subsystem 631 may be configured to include any of the components described herein. Further, processing circuitry 601 may be configured to communicate with any of such components over bus 602. In another example, any of such components may be represented by program instructions stored in memory that when executed by processing circuitry 601 perform the corresponding functions described herein. In another example, the functionality of any of such components may be partitioned between processing circuitry 601 and communication subsystem 631. In another example, the non-computationally intensive functions of any of such components may be implemented in software or firmware and the computationally intensive functions may be implemented in hardware.

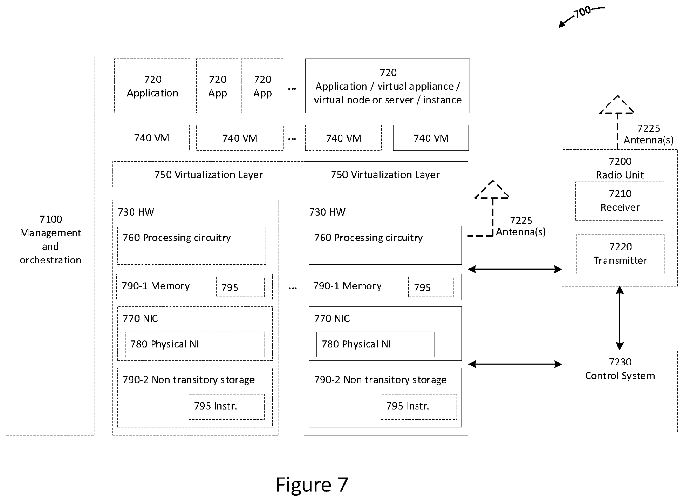

Figure 7 is a schematic block diagram illustrating a virtualization environment 700 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 700 hosted by one or more of hardware nodes 730. Further, in embodiments in which the virtual node is not a radio access node or does not require radio connectivity (e.g., a core network node), then the network node may be entirely virtualized.

The functions may be implemented by one or more applications 720 (which may alternatively be called software instances, virtual appliances, network functions, virtual nodes, virtual network functions, etc.) operative to implement some of the features, functions, and/or benefits of some of the embodiments disclosed herein. Applications 720 are run in virtualization environment 700 which provides hardware 730 comprising processing circuitry 760 and memory 790. Memory 790 contains instructions 795 executable by processing circuitry 760 whereby application 720 is operative to provide one or more of the features, benefits, and/or functions disclosed herein.

Virtualization environment 700, comprises general-purpose or special-purpose network hardware devices 730 comprising a set of one or more processors or processing circuitry 760, which may be commercial off-the-shelf (COTS) processors, dedicated Application Specific Integrated Circuits (ASICs), or any other type of processing circuitry including digital or analog hardware components or special purpose processors. Each hardware device may comprise memory 790-1 which may be non-persistent memory for temporarily storing instructions 795 or software executed by processing circuitry 760. Each hardware device may comprise one or more network interface controllers (NICs) 770, also known as network interface cards, which include physical network interface 780. Each hardware device may also include non-transitory, persistent, machine-readable storage media 790-2 having stored therein software 795 and/or instructions executable by processing circuitry 760. Software 795 may include any type of software including software for instantiating one or more virtualization layers 750 (also referred to as hypervisors), software to execute virtual machines 740 as well as software allowing it to execute functions, features and/or benefits described in relation with some embodiments described herein.

Virtual machines 740, comprise virtual processing, virtual memory, virtual networking or interface and virtual storage, and may be run by a corresponding virtualization layer 750 or hypervisor. Different embodiments of the instance of virtual appliance 720 may be implemented on one or more of virtual machines 740, and the implementations may be made in different ways.

During operation, processing circuitry 760 executes software 795 to instantiate the hypervisor or virtualization layer 750, which may sometimes be referred to as a virtual machine monitor (VMM). Virtualization layer 750 may present a virtual operating platform that appears like networking hardware to virtual machine 740.

As shown in Figure 7, hardware 730 may be a standalone network node with generic or specific components. Hardware 730 may comprise antenna 7225 and may implement some functions via virtualization. Alternatively, hardware 730 may be part of a larger cluster of hardware (e.g. such as in a data center or customer premise equipment (CPE)) where many hardware nodes work together and are managed via management and orchestration (MANO) 7100, which, among others, oversees lifecycle management of applications 720.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 740 may be a software implementation of a physical machine that runs programs as if they were executing on a physical, non-virtualized machine. Each of virtual machines 740, and that part of hardware 730 that executes that virtual machine, be it hardware dedicated to that virtual machine and/or hardware shared by that virtual machine with others of the virtual machines 740, forms a separate virtual network elements (VNE).

Still in the context of NFV, Virtual Network Function (VNF) is responsible for handling specific network functions that run in one or more virtual machines 740 on top of hardware networking infrastructure 730 and corresponds to application 720 in Figure 7.

In some embodiments, one or more radio units 7200 that each include one or more transmitters 7220 and one or more receivers 7210 may be coupled to one or more antennas 7225. Radio units 7200 may communicate directly with hardware nodes 730 via one or more appropriate network interfaces and may be used in combination with the virtual components to provide a virtual node with radio capabilities, such as a radio access node or a base station.

In some embodiments, some signalling can be effected with the use of control system 7230 which may alternatively be used for communication between the hardware nodes 730 and radio units 7200.

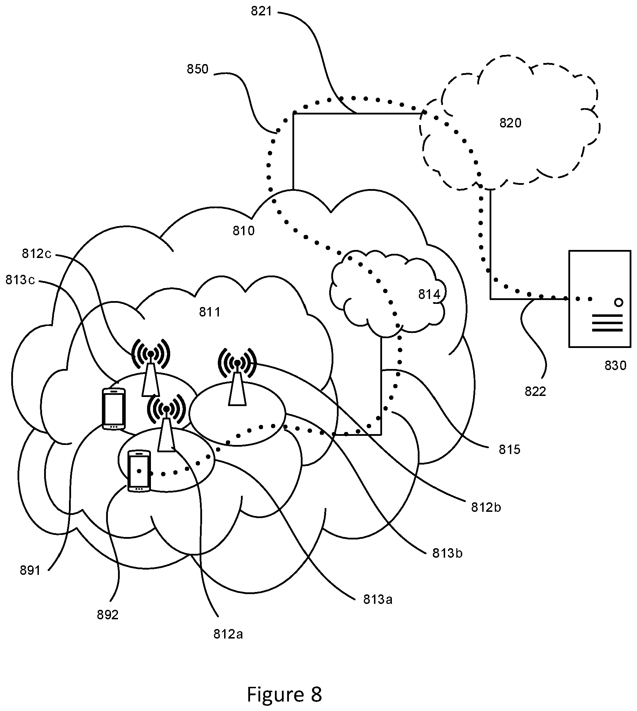

With reference to Figure 8, in accordance with an embodiment, a communication system includes telecommunication network 810, such as a 3GPP-type cellular network, which comprises access network 811, such as a radio access network, and core network 814. Access network 811 comprises a plurality of base stations 812a, 812b, 812c, such as NBs, eNBs, gNBs or other types of wireless access points, each defining a corresponding coverage area 813a, 813b, 813c. Each base station 812a, 812b, 812c is connectable to core network 814 over a wired or wireless connection 815. A first UE 891 located in coverage area 813c is configured to wirelessly connect to, or be paged by, the corresponding base station 812c. A second UE 892 in coverage area 813a is wirelessly connectable to the corresponding base station 812a. While a plurality of UEs 891, 892 are illustrated in this example, the disclosed embodiments are equally applicable to a situation where a sole UE is in the coverage area or where a sole UE is connecting to the corresponding base station 812.

Telecommunication network 810 is itself connected to host computer 830, which may be embodied in the hardware and/or software of a standalone server, a cloud-implemented server, a distributed server or as processing resources in a server farm. Host computer 830 may be under the ownership or control of a service provider, or may be operated by the service provider or on behalf of the service provider. Connections 821 and 822 between telecommunication network 810 and host computer 830 may extend directly from core network 814 to host computer 830 or may go via an optional intermediate network 820. Intermediate network 820 may be one of, or a combination of more than one of, a public, private or hosted network; intermediate network 820, if any, may be a backbone network or the Internet; in particular, intermediate network 820 may comprise two or more sub-networks (not shown).

The communication system of Figure 8 as a whole enables connectivity between the connected UEs 891, 892 and host computer 830. The connectivity may be described as an over-the-top (OTT) connection 850. Host computer 830 and the connected UEs 891, 892 are configured to communicate data and/or signaling via OTT connection 850, using access network 811, core network 814, any intermediate network 820 and possible further infrastructure (not shown) as intermediaries. OTT connection 850 may be transparent in the sense that the participating communication devices through which OTT connection 850 passes are unaware of routing of uplink and downlink communications. For example, base station 812 may not or need not be informed about the past routing of an incoming downlink communication with data originating from host computer 830 to be forwarded (e.g., handed over) to a connected UE 891. Similarly, base station 812 need not be aware of the future routing of an outgoing uplink communication originating from the UE 891 towards the host computer 830.

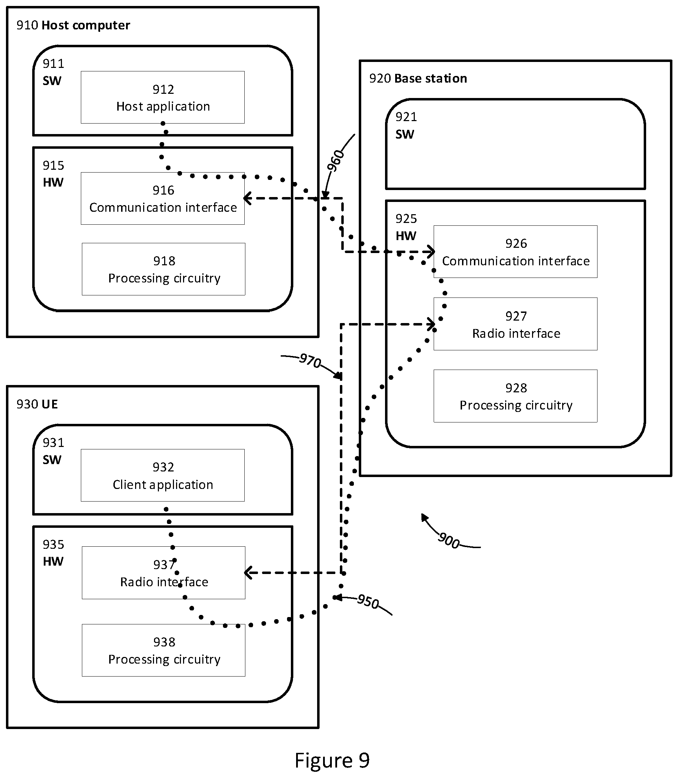

Example implementations, in accordance with an embodiment, of the UE, base station and host computer discussed in the preceding paragraphs will now be described with reference to Figure 9. In communication system 900, host computer 910 comprises hardware 915 including communication interface 916 configured to set up and maintain a wired or wireless connection with an interface of a different communication device of communication system 900. Host computer 910 further comprises processing circuitry 918, which may have storage and/or processing capabilities. In particular, processing circuitry 918 may comprise one or more programmable processors, application-specific integrated circuits, field programmable gate arrays or combinations of these (not shown) adapted to execute instructions. Host computer 910 further comprises software 911, which is stored in or accessible by host computer 910 and executable by processing circuitry 918. Software 911 includes host application 912. Host application 912 may be operable to provide a service to a remote user, such as UE 930 connecting via OTT connection 950 terminating at UE 930 and host computer 910. In providing the service to the remote user, host application 912 may provide user data which is transmitted using OTT connection 950.

Communication system 900 further includes base station 920 provided in a telecommunication system and comprising hardware 925 enabling it to communicate with host computer 910 and with UE 930. Hardware 925 may include communication interface 926 for setting up and maintaining a wired or wireless connection with an interface of a different communication device of communication system 900, as well as radio interface 927 for setting up and maintaining at least wireless connection 970 with UE 930 located in a coverage area (not shown in Figure 9) served by base station 920. Communication interface 926 may be configured to facilitate connection 960 to host computer 910. Connection 960 may be direct or it may pass through a core network (not shown in Figure 9) of the telecommunication system and/or through one or more intermediate networks outside the telecommunication system. In the embodiment shown, hardware 925 of base station 920 further includes processing circuitry 928, which may comprise one or more programmable processors, application-specific integrated circuits, field programmable gate arrays or combinations of these (not shown) adapted to execute instructions. Base station 920 further has software 921 stored internally or accessible via an external connection.

Communication system 900 further includes UE 930 already referred to. Its hardware 935 may include radio interface 937 configured to set up and maintain wireless connection 970 with a base station serving a coverage area in which UE 930 is currently located. Hardware 935 of UE 930 further includes processing circuitry 938, which may comprise one or more programmable processors, application-specific integrated circuits, field programmable gate arrays or combinations of these (not shown) adapted to execute instructions. UE 930 further comprises software 931, which is stored in or accessible by UE 930 and executable by processing circuitry 938. Software 931 includes client application 932.

Client application 932 may be operable to provide a service to a human or non-human user via UE 930, with the support of host computer 910. In host computer 910, an executing host application 912 may communicate with the executing client application 932 via OTT connection 950 terminating at UE 930 and host computer 910. In providing the service to the user, client application 932 may receive request data from host application 912 and provide user data in response to the request data. OTT connection 950 may transfer both the request data and the user data. Client application 932 may interact with the user to generate the user data that it provides.

It is noted that host computer 910, base station 920 and UE 930 illustrated in Figure 9 may be similar or identical to host computer 830, one of base stations 812a, 812b, 812c and one of UEs 891, 892 of Figure 8, respectively. This is to say, the inner workings of these entities may be as shown in Figure 9 and independently, the surrounding network topology may be that of Figure 8.

In Figure 9, OTT connection 950 has been drawn abstractly to illustrate the communication between host computer 910 and UE 930 via base station 920, without explicit reference to any intermediary devices and the precise routing of messages via these devices. Network infrastructure may determine the routing, which it may be configured to hide from UE 930 or from the service provider operating host computer 910, or both. While OTT connection 950 is active, the network infrastructure may further take decisions by which it dynamically changes the routing (e.g., on the basis of load balancing consideration or reconfiguration of the network).

Wireless connection 970 between UE 930 and base station 920 is in accordance with the teachings of the embodiments described throughout this disclosure. One or more of the various embodiments improve the performance of OTT services provided to UE 930 using OTT connection 950, in which wireless connection 970 forms the last segment. More precisely, the teachings of these embodiments may improve the service availability to OTT services. Without a suitable solution for supporting bandwidth-restricted UEs, the network may need to configure CORESET#0 to a smaller bandwidth also for ordinary UEs (which would be able to handle larger bandwidth). This would result in limited PDCCH capacity and as a consequence certain connection requests may be blocked. In congestion scenarios, the network may use access control to bar certain UEs or certain connection requests. When such access control is employed, OTT services may be associated with access categories that have relatively low priority, whereby OTT services may be more likely to be barred than other access categories. A measurement procedure may be provided for the purpose of monitoring data rate, latency and other factors on which the one or more embodiments improve. There may further be an optional network functionality for reconfiguring OTT connection 950 between host computer 910 and UE 930, in response to variations in the measurement results. The measurement procedure and/or the network functionality for reconfiguring OTT connection 950 may be implemented in software 911 and hardware 915 of host computer 910 or in software 931 and hardware 935 of UE 930, or both. In embodiments, sensors (not shown) may be deployed in or in association with communication devices through which OTT connection 950 passes; the sensors may participate in the measurement procedure by supplying values of the monitored quantities exemplified above, or supplying values of other physical quantities from which software 911, 931 may compute or estimate the monitored quantities. The reconfiguring of OTT connection 950 may include message format, retransmission settings, preferred routing etc.; the reconfiguring need not affect base station 920, and it may be unknown or imperceptible to base station 920. Such procedures and functionalities may be known and practiced in the art. In certain embodiments, measurements may involve proprietary UE signaling facilitating host computer 910's measurements of throughput, propagation times, latency and the like. The measurements may be implemented in that software 911 and 931 causes messages to be transmitted, in particular empty or 'dummy' messages, using OTT connection 950 while it monitors propagation times, errors etc.

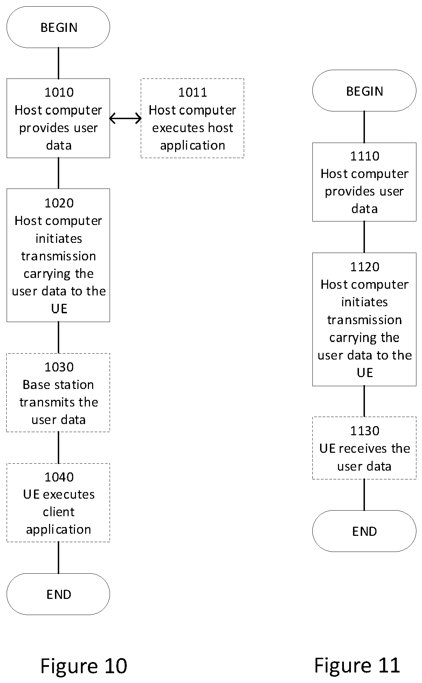

Figure 10 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 10 will be included in this section. In step 1010, the host computer provides user data. In substep 1011 (which may be optional) of step 1010, the host computer provides the user data by executing a host application. In step 1020, the host computer initiates a transmission carrying the user data to the UE. In step 1030 (which may be optional), the base station transmits to the UE the user data which was carried in the transmission that the host computer initiated, in accordance with the teachings of the embodiments described throughout this disclosure. In step 1040 (which may also be optional), the UE executes a client application associated with the host application executed by the host computer.

Figure 11 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 11 will be included in this section. In step 1110 of the method, the host computer provides user data. In an optional substep (not shown) the host computer provides the user data by executing a host application. In step 1120, the host computer initiates a transmission carrying the user data to the UE. The transmission may pass via the base station, in accordance with the teachings of the embodiments described throughout this disclosure. In step 1130 (which may be optional), the UE receives the user data carried in the transmission.

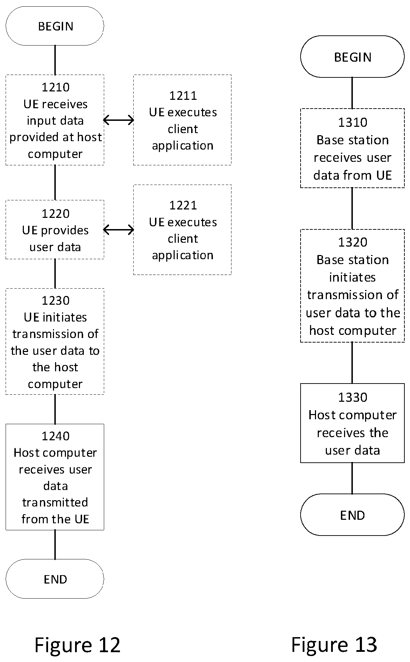

Figure 12 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 12 will be included in this section. In step 1210 (which may be optional), the UE receives input data provided by the host computer. Additionally or alternatively, in step 1220, the UE provides user data. In substep 1221 (which may be optional) of step 1220, the UE provides the user data by executing a client application. In substep 1211 (which may be optional) of step 1210, the UE executes a client application which provides the user data in reaction to the received input data provided by the host computer. In providing the user data, the executed client application may further consider user input received from the user. Regardless of the specific manner in which the user data was provided, the UE initiates, in substep 1230 (which may be optional), transmission of the user data to the host computer. In step 1240 of the method, the host computer receives the user data transmitted from the UE, in accordance with the teachings of the embodiments described throughout this disclosure.

Figure 13 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 13 will be included in this section. In step 1310 (which may be optional), in accordance with the teachings of the embodiments described throughout this disclosure, the base station receives user data from the UE. In step 1320 (which may be optional), the base station initiates transmission of the received user data to the host computer. In step 1330 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| 1x RTT | CDMA2000 1x Radio Transmission Technology |
| 3GPP | 3rd Generation Partnership Project |
| 5G | 5th Generation |
| ABS | Almost Blank Subframe |
| AL | aggregation level |
| ARQ | Automatic Repeat Request |
| AWGN | Additive White Gaussian Noise |
| BCCH | Broadcast Control Channel |
| BCH | Broadcast Channel |
| CA | Carrier Aggregation |
| CC | Carrier Component |
| CCCH SDU | Common Control Channel SDU |
| CDMA | Code Division Multiplexing Access |
| CGI | Cell Global Identifier |
| CIR | Channel Impulse Response |
| CORESET | Control Resource Set |
| CP | Cyclic Prefix |
| CPICH | Common Pilot Channel |

| | |
|---|---|
| CPICH Ec/No | CPICH Received energy per chip divided by the power density in the band |
| CQI | Channel Quality information |
| C-RNTI | Cell RNTI |
| CSI | Channel State Information |
| DCCH | Dedicated Control Channel |
| DCI | downlink control information |
| DL | Downlink |
| DM | Demodulation |
| DMRS | Demodulation Reference Signal |
| DRX | Discontinuous Reception |
| DTX | Discontinuous Transmission |
| DTCH | Dedicated Traffic Channel |
| DUT | Device Under Test |
| E-CID | Enhanced Cell-ID (positioning method) |
| E-SMLC | Evolved-Serving Mobile Location Centre |
| ECGI | Evolved CGI |
| eNB | E-UTRAN NodeB |
| ePDCCH | enhanced Physical Downlink Control Channel |
| E-SMLC | evolved Serving Mobile Location Center |
| E-UTRA | Evolved UTRA |
| E-UTRAN | Evolved UTRAN |
| FDD | Frequency Division Duplex |
| FFS | For Further Study |
| GERAN | GSM EDGE Radio Access Network |
| gNB | Base station in NR |
| GNSS | Global Navigation Satellite System |
| GSM | Global System for Mobile communication |
| HARQ | Hybrid Automatic Repeat Request |
| HO | Handover |
| HSPA | High Speed Packet Access |
| HRPD | High Rate Packet Data |
| LOS | Line of Sight |
| LPP | LTE Positioning Protocol |
| LTE | Long-Term Evolution |
| MAC | Medium Access Control |
| MBMS | Multimedia Broadcast Multicast Services |
| MBSFN | Multimedia Broadcast multicast service Single Frequency Network |
| MBSFN ABS | MBSFN Almost Blank Subframe |
| MDT | Minimization of Drive Tests |
| MIB | Master Information Block |
| MME | Mobility Management Entity |
| MSC | Mobile Switching Center |
| NPDCCH | Narrowband Physical Downlink Control Channel |
| NR | New Radio |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTDOA | Observed Time Difference of Arrival |
| O&M | Operation and Maintenance |
| PBCH | Physical Broadcast Channel |
| P-CCPCH | Primary Common Control Physical Channel |
| PCell | Primary Cell |
| PCFICH | Physical Control Format Indicator Channel |
| PDCCH | Physical Downlink Control Channel |
| PDCP | Packet Data Convergence Protocol |
| PDP | Profile Delay Profile |
| PDSCH | Physical Downlink Shared Channel |

| PGW | Packet Gateway |
| PHICH | Physical Hybrid-ARQ Indicator Channel |
| PLMN | Public Land Mobile Network |
| PMI | Precoder Matrix Indicator |
| PRACH | Physical Random Access Channel |
| PRS | Positioning Reference Signal |
| PSS | Primary Synchronization Signal |
| PUCCH | Physical Uplink Control Channel |
| PUSCH | Physical Uplink Shared Channel |
| RACH | Random Access Channel |
| QAM | Quadrature Amplitude Modulation |
| RAN | Radio Access Network |
| RAT | Radio Access Technology |
| RAR | random access response |
| RB | Resource Block |
| RLC | Radio Link Control |
| RLM | Radio Link Management |

**Claims**

1. A method (100) performed by a network node (560), the method comprising:

   - transmitting (110) broadcast information (201) which comprises a master information block, MIB, wherein the MIB indicates a set (202) of control resource elements;
   - transmitting (120), in the set of control resource elements, first control information for use by a wireless device capable of supporting the bandwidth of the set of control resource elements, the first control information scheduling a first downlink message (203), wherein the first downlink message is a system information block type 1, SIB1; and
   - transmitting (130), in a subset (204) of the set of control resource elements, second control information for use by a bandwidth-restricted wireless device, wherein the subset of the set of control resource elements has a smaller bandwidth than the set of control resource elements, and wherein the second control information schedules a second downlink message (205),

   wherein the method is **characterized in that**:

   the second control information is transmitted with a higher repetition factor than the first control information; or
   the second control information is transmitted with a higher power level than the first control information; or

   the second control information is transmitted with a lower code rate than the first control information.

2. The method of claim 1, wherein the first downlink message comprises configuration information for an initial bandwidth part, BWP, (206) for a first type of wireless devices, and wherein the second downlink message comprises configuration information for an initial BWP (207) for a second type of wireless devices, wherein the initial BWP for the second type of wireless devices has a smaller bandwidth than the initial BWP for the first type of wireless devices.

3. The method of any of the preceding claims, wherein the set of control resource elements is a control resource set number 0, CORESET#0.

4. The method of any of the preceding claims, wherein the second downlink message is a system information block, SIB.

5. The method of any of the preceding claims, wherein the set of control resource elements has a bandwidth of more than 10 MHz, and wherein the subset of the set of control resource elements has a bandwidth of most 10 MHz.

6. The method of any of the preceding claims, wherein the second downlink message is adapted for use in random access configuration.

7. The method of any of claims 1-5, wherein the second downlink message is adapted for use in paging.

8. The method of any of claims 1-5, wherein the second downlink message is adapted for use in system information acquisition.

9. A network node (560) configured to

- transmit broadcast information (201) which comprises a master information block, MIB, wherein the MIB indicates a set (202) of control resource elements;
- transmit (120), in the set of control resource elements, first control information for use by a wireless device capable of supporting the bandwidth of the set of control resource elements, the first control information scheduling a first downlink message (203), wherein the first downlink message is a system information block type 1, SIB1; and
- transmit, in a subset (204) of the set of control resource elements, second control information for use by a bandwidth-restricted wireless device, wherein the subset of the set of control resource elements has a smaller bandwidth than the set of control resource elements, and wherein the second control information schedules a second downlink message (205),

wherein the network node is **characterized in that**:

the second control information is transmitted with a higher repetition factor than the first control information; or
the second control information is transmitted with a higher power level than the first control information; or
the second control information is transmitted with a lower code rate than the first control information.


**Patentansprüche**

1. Verfahren (100), das von einem Netzwerkknoten (560) durchgeführt wird, wobei das Verfahren Folgendes umfasst:

- Senden (110) von Broadcast-Informationen (201), die einen Master-Informationsblock, MIB, umfassen, wobei der MIB einen Satz (202) von Steuerressourcenelementen angibt;
- Senden (120) von ersten Steuerinformationen zur Verwendung durch eine drahtlose Vorrichtung, die zum Unterstützen der Bandbreite des Satzes von Steuerressourcenelementen in der Lage ist, in dem Satz von Steuerressourcenelementen, wobei die ersten Steuerinformationen eine erste Downlink-Nachricht (203) disponieren, wobei die erste Downlink-Nachricht ein Systeminformationsblock Typ 1, SIB1, ist; und
- Senden (130) von zweiten Steuerinformationen zur Verwendung durch eine bandbreitenbeschränkte drahtlose Vorrichtung in einer Teilmenge (204) des Satzes von Steuerressourcenelementen, wobei die Teilmenge des Satzes von Steuerressourcenelementen eine kleinere Bandbreite aufweist als der Satz von Steuerressourcenelementen und wobei die zweiten Steuerinformationen eine zweite Downlink-Nachricht (205) disponieren,

wobei das Verfahren **dadurch gekennzeichnet ist, dass**:

die zweiten Steuerinformationen mit einem höheren Wiederholungsfaktor gesendet werden als die ersten Steuerinformationen; oder
die zweiten Steuerinformationen mit einem höheren Leistungspegel gesendet werden als die ersten Steuerinformationen; oder
die zweiten Steuerinformationen mit einer niedrigeren Code-Rate gesendet werden als die ersten Steuerinformationen.

2. Verfahren nach Anspruch 1, wobei die erste Downlink-Nachricht Konfigurationsinformationen für einen anfänglichen Bandbreitenteil, BWP, (206) für einen ersten Typ von drahtlosen Vorrichtungen umfasst und wobei die zweite Downlink-Nachricht Konfigurationsinformationen für einen anfänglichen BWP (207) für einen zweiten Typ von drahtlosen Vorrichtungen umfasst, wobei der anfängliche BWP für den zweiten Typ von drahtlosen Vorrichtungen eine kleinere Bandbreite aufweist als der anfängliche BWP für den ersten Typ von drahtlosen Vorrichtungen.

3. Verfahren nach einem der vorhergehenden Ansprüche, wobei es sich bei dem Satz von Steuerressourcenelementen um einen Steuerressourcensatz Nummer 0, CORESET#0, handelt.

4. Verfahren nach einem der vorhergehenden Ansprüche, wobei die zweite Downlink-Nachricht ein Systeminformationsblock, SIB, ist.

5. Verfahren nach einem der vorhergehenden Ansprüche, wobei der Satz von Steuerressourcenelementen eine Bandbreite von mehr als 10 MHz aufweist und wobei die Teilmenge des Satzes von Steuerressourcenelementen eine Bandbreite von höchstens 10 MHz aufweist.

6. Verfahren nach einem der vorhergehenden Ansprüche, wobei die zweite Downlink-Nachricht zur Verwendung bei der Direktzugriffskonfiguration angepasst wird.

7. Verfahren nach einem der Ansprüche 1-5, wobei die zweite Downlink-Nachricht zur Verwendung beim Paging angepasst wird.

8. Verfahren nach einem der Ansprüche 1-5, wobei die zweite Downlink-Nachricht zur Verwendung bei der Systeminformationserfassung angepasst wird.

9. Netzwerkknoten (560), konfiguriert zu Folgendem:

   - Senden von Broadcast-Informationen (201), die einen Master-Informationsblock, MIB, umfassen, wobei der MIB einen Satz (202) von Steuerressourcenelementen angibt;
   - Senden (120) von ersten Steuerinformationen zur Verwendung durch eine drahtlose Vorrichtung, die zum Unterstützen der Bandbreite des Satzes von Steuerressourcenelementen in der Lage ist, in dem Satz von Steuerressourcenelementen, wobei die ersten Steuerinformationen eine erste Downlink-Nachricht (203) disponieren, wobei die erste Downlink-Nachricht ein Systeminformationsblock Typ 1, SIB1, ist; und
   - Senden von zweiten Steuerinformationen zur Verwendung durch eine bandbreitenbeschränkte drahtlose Vorrichtung in einer Teilmenge (204) des Satzes von Steuerressourcenelementen, wobei die Teilmenge des Satzes von Steuerressourcenelementen eine kleinere Bandbreite aufweist als der Satz von Steuerressourcenelementen und wobei die zweiten Steuerinformationen eine zweite Downlink-Nachricht (205) disponieren,

   wobei der Netzwerkknoten **dadurch gekennzeichnet ist, dass**:

   die zweiten Steuerinformationen mit einem höheren Wiederholungsfaktor gesendet werden als die ersten Steuerinformationen; oder
   die zweiten Steuerinformationen mit einem höheren Leistungspegel gesendet werden als die ersten Steuerinformationen; oder
   die zweiten Steuerinformationen mit einer niedrigeren Code-Rate gesendet werden als die ersten Steuerinformationen.

**Revendications**

1. Procédé (100) réalisé par un nœud de réseau (560), le procédé comprenant :

   - la transmission (110) d'informations de diffusion (201) qui comprennent un bloc d'informations maître, MIB, dans lequel le MIB indique un ensemble (202) d'éléments de ressources de commande ;
   - la transmission (120), dans l'ensemble d'éléments de ressources de commande, de premières informations de commande destinées à être utilisées par un dispositif sans fil capable de prendre en charge la bande passante de l'ensemble d'éléments de ressources de commande, les premières informations de commande planifiant un premier message de liaison descendante (203), dans lequel le premier message de liaison descendante est un bloc d'informations système de type 1, SIB1 ; et
   - la transmission (130), dans un sous-ensemble (204) de l'ensemble d'éléments de ressources de commande, de deuxièmes informations de commande destinées à être utilisées par un dispositif sans fil présentant des restrictions de bande passante, dans lequel le sous-ensemble de l'ensemble d'éléments de ressources de commande présente une bande passante inférieure à celle de l'ensemble d'éléments de ressources de commande, et dans lequel les deuxièmes informations de commande planifient un deuxième message de liaison descendante (205),

   dans lequel le procédé est **caractérisé en ce que** :

   les deuxièmes informations de commande sont transmises avec un facteur de répétition supérieur à celui des premières informations de commande ; ou

les deuxièmes informations de commande sont transmises avec un niveau de puissance supérieur à celui des premières informations de commande ; ou

les deuxièmes informations de commande sont transmises avec un débit de code inférieur à celui des premières informations de commande.

2. Procédé selon la revendication 1, dans lequel le premier message de liaison descendante comprend des informations de configuration pour une partie de bande passante, BWP, initiale (206) pour un premier type de dispositifs sans fil, et dans lequel le deuxième message de liaison descendante comprend des informations de configuration pour une BWP initiale (207) pour un deuxième type de dispositifs sans fil, dans lequel la BWP initiale pour le deuxième type de dispositifs sans fil présente une bande passante inférieure à celle de la BWP initiale pour le premier type de dispositifs sans fil.

3. Procédé selon l'une quelconque des revendications précédentes, dans lequel l'ensemble d'éléments de ressources de commande est un ensemble de ressources de commande numéro 0, CORESET#0.

4. Procédé selon l'une quelconque des revendications précédentes, dans lequel le deuxième message de liaison descendante est un bloc d'informations système, SIB.

5. Procédé selon l'une quelconque des revendications précédentes, dans lequel l'ensemble d'éléments de ressources de commande présente une bande passante supérieure à 10 MHz, et dans lequel le sous-ensemble de l'ensemble d'éléments de ressources de commande présente une bande passante d'au plus 10 MHz.

6. Procédé selon l'une quelconque des revendications précédentes, dans lequel le deuxième message de liaison descendante est adapté pour être utilisé dans une configuration d'accès aléatoire.

7. Procédé selon l'une quelconque des revendications 1 à 5, dans lequel le deuxième message de liaison descendante est adapté pour être utilisé en radiomessagerie.

8. Procédé selon l'une quelconque des revendications 1 à 5, dans lequel le deuxième message de liaison descendante est adapté pour être utilisé dans l'acquisition d'informations système.

9. Nœud de réseau (560) configuré pour :

- transmettre des informations de diffusion (201) qui comprennent un bloc d'informations maître, MIB, dans lequel le MIB indique un ensemble (202) d'éléments de ressources de commande ;
- transmettre (120), dans l'ensemble d'éléments de ressources de commande, des premières informations de commande destinées à être utilisées par un dispositif sans fil capable de prendre en charge la bande passante de l'ensemble d'éléments de ressources de commande, les premières informations de commande planifiant un premier message de liaison descendante (203), dans lequel le premier message de liaison descendante est un bloc d'informations système de type 1, SIB1 ; et
- transmettre, dans un sous-ensemble (204) de l'ensemble d'éléments de ressources de commande, des deuxièmes informations de commande destinées à être utilisées par un dispositif sans fil présentant des restrictions de bande passante, dans lequel le sous-ensemble de l'ensemble d'éléments de ressources de commande présente une bande passante inférieure à celle de l'ensemble d'éléments de ressources de commande, et dans lequel les deuxièmes informations de commande planifient un deuxième message de liaison descendante (205),

dans lequel le nœud de réseau est **caractérisé en ce que** :

les deuxièmes informations de commande sont transmises avec un facteur de répétition supérieur à celui des premières informations de commande ; ou

les deuxièmes informations de commande sont transmises avec un niveau de puissance supérieur à celui des premières informations de commande ; ou

les deuxièmes informations de commande sont transmises avec un débit de code inférieur à celui des premières informations de commande.

```
                          ┌─────────────────────┐
                          │ Transmit broadcast  │╶──  110
                          │ information         │
                          └─────────────────────┘
                                     │
                                     ▼
                          ┌─────────────────────┐
                          │ Transmit first control │╶──  120
                          │ information         │
                          └─────────────────────┘
                                     │
                                     ▼
                          ┌─────────────────────┐
  100 ↗                   │ Transmit second     │╶──  130
                          │ control information │
                          └─────────────────────┘
                                     │
                                     ▼
                          ┌ ─ ─ ─ ─ ─ ─ ─ ─ ─ ─ ┐
                          │ Transmit first      │╶──  140
                          │ downlink message    │
                          └ ─ ─ ─ ─ ─ ─ ─ ─ ─ ─ ┘
                                     │
                                     ▼
                          ┌ ─ ─ ─ ─ ─ ─ ─ ─ ─ ─ ┐
                          │ Transmit second     │╶──  150
                          │ downlink message    │
                          └ ─ ─ ─ ─ ─ ─ ─ ─ ─ ─ ┘
                                     │
                                     ▼
                          ┌ ─ ─ ─ ─ ─ ─ ─ ─ ─ ─ ┐
                          │ Indicate presence of │
                          │ second control      │╶──  160
                          │ information         │
                          └ ─ ─ ─ ─ ─ ─ ─ ─ ─ ─ ┘
                                     │
                                     ▼
                          ┌ ─ ─ ─ ─ ─ ─ ─ ─ ─ ─ ┐
                          │ Indicate that second │
                          │ control information is │╶──  170
                          │ for a bandwidth-    │
                          │ restricted wireless │
                          │ device              │
                          └ ─ ─ ─ ─ ─ ─ ─ ─ ─ ─ ┘
```

Figure 1

DCI with SI-L-RNTI (PDCCH)

BWP-Common

204

201

MIB (PBCH)

SIB1-L (PDSCH)

17.28 MHz

CORESET#0

SIB1 (PDSCH)

RRC signaling

BWP#0

100 MHz

207

202

208

205

203

DCI with SI-RNTI (PDCCH)

BWP-Dedicated

206

BWP-Common

RRC signaling (NR-L)

BWP#0 (NR-L)

8.64 MHz

209

BWP-Dedicated

Figure 2

time

frequency

N_symb_CORESET

N_symb_CORESET

305

Shift(Cell ID)

Shift(Cell ID)

308

302

Reserved for Legacy PDCCHs

A

A

Reserved for Legacy PDCCHs

304

N_RB_CORESET/2

N_RB_CORESET

307

N_RB_CORESET/2

N_RB_CORESET

301

Reserved for Legacy PDCCHs

A

306

Reserved for Legacy PDCCHs

A

303

Figure 3

Receive broadcast
information — 410

Receive second
control information — 420

400

Receive indication of
presence of second
control information — 430

Receive indication
that second control
information is for
bandwidth-restricted
wireless device — 440

Receive second
downlink message — 450

Figure 4

Figure 5

Figure 6

700

| 720 Application | 720 App | 720 App | ... | 720 Application / virtual appliance / virtual node or server / instance |

| 740 VM | 740 VM | ... | 740 VM | 740 VM |

| 750 Virtualization Layer | 750 Virtualization Layer |

7100 Management and orchestration

**730 HW**

760 Processing circuitry

790-1 Memory | 795

770 NIC

780 Physical NI

790-2 Non transitory storage

795 Instr.

...

**730 HW**

760 Processing circuitry

790-1 Memory | 795

770 NIC

780 Physical NI

790-2 Non transitory storage

795 Instr.

7225 Antenna(s)

7225 Antenna(s)

7200 Radio Unit

7210 Receiver

7220 Transmitter

7230 Control System

Figure 7

Figure 8

**910 Host computer**

**911 SW**

**912**
Host application

**915 HW**

**916**
Communication interface

**918**
Processing circuitry

**920 Base station**

**921 SW**

**925 HW**

**926**
Communication interface

**927**
Radio interface

**928**
Processing circuitry

960

970

900

**930 UE**

**931 SW**

**932**
Client application

**935 HW**

**937**
Radio interface

**938**
Processing circuitry

950

Figure 9

BEGIN

1010
Host computer provides user data

1011
Host computer executes host application

1020
Host computer initiates transmission carrying the user data to the UE

1030
Base station transmits the user data

1040
UE executes client application

END

Figure 10

BEGIN

1110
Host computer provides user data

1120
Host computer initiates transmission carrying the user data to the UE

1130
UE receives the user data

END

Figure 11

BEGIN

1210
UE receives
input data
provided at host
computer

1211
UE executes
client
application

1220
UE provides
user data

1221
UE executes
client
application

1230
UE initiates
transmission of
the user data to
the host
computer

1240
Host computer
receives user
data
transmitted
from the UE

END

Figure 12

BEGIN

1310
Base station
receives user
data from UE

1320
Base station
initiates
transmission of
user data to the
host computer

1330
Host computer
receives the
user data

END

Figure 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130083753 A1
- US 20190053140 A1
- WO 2018030305 A1
- US 20160219587 A1